# EUROPÄISCHE PATENTSCHRIFT

(11) **EP 0 846 065 B1**
(45) Veröffentlichungstag und Bekanntmachung des Hinweises auf die Patenterteilung: **07.11.2001**
(21) Anmeldenummer: 96934400.1
(22) Anmeldetag: 31.08.1996
(51) Int. Cl.: B60K 28/16, B60K 6/04

(54) **ANTRIEBSSCHLUPFSTEUERUNGSSYSTEM FÜR EIN KRAFTFAHRZEUG UNTER VERWENDUNG EINER ELEKTRISCHEN MASCHINE**
TRACTION CONTROL SYSTEM FOR A MOTOR VEHICLE, USING AN ELECTRICAL MACHINE
SYSTEME ANTI-PATINAGE UTILISANT UN MOTEUR ELECTRIQUE, DESTINE A UNE AUTOMOBILE

(30) Priorität: 31.08.1995 DE 19532163; 31.08.1995 DE 19532135; 31.08.1995 DE 19532136
(43) Veröffentlichungstag der Anmeldung: 10.06.1998
(73) Patentinhaber: Continental ISAD Electronic Systems GmbH & Co. oHG, 86899 Landsberg/Lech (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601614
(87) Internationale Veröffentlichungsnummer: WO9708008

(56) Entgegenhaltungen:
- DE-A- 4 100 937
- DE-U- 29 502 906
- US-A- 4 942 950
- US-A- 5 053 632
- US-A- 5 303 794
- US-A- 5 431 241

## Beschreibung

Die Erfindung betrifft ein Antriebssystem.

Grundsätzlich hängt bei Fahrzeugen die - für die Fortbewegung des Fahrzeuges verantwortliche - Kraftübertragung vom Antriebsschlupf zwischen Reifen und Fahrbahn ab. Im allgemeinen laufen die Anfahr- bzw. Beschleunigungsvorgänge bei kleinen Schlupfwerten ab, bei denen eine Erhöhung des Schlupfes zunächst auch eine Erhöhung des ausnutzbaren Kraftschlusses ergibt. Bei einer weiteren Erhöhung reduziert sich jedoch der Kraftschluß wieder, so daß bei entsprechender Beschleunigung ein größer werdendes überschüssiges Antriebsmoment zu einer schnellen Drehzahlerhöhung eines Antriebsrades bzw. der Antriebsräder führt.

Eine Regelung des Antriebsschlupfes, d.h. eine sog. Antriebsschlupfregelung (ASR), verhindert ein derartig hervorgerufenes Durchdrehen der Antriebsräder und regelt den Antriebsschlupf auf zulässige Werte. Derartige Antriebsschlupfregelungen sind aus dem Stand der Technik bekannt (siehe z.B. "Kraftfahrtechnisches Taschenbuch", Herausgeber: Robert Bosch GmbH, Düsseldorf, 21. Auflage, 1991, Seite 555 - 559).

Die Regelung des Antriebsschlupfes wird dort derart durchgeführt, daß bei Erreichen eines Grenzwertes des Antriebsschlupfes oder einer zeitlichen Änderung (zeitliche Ableitung) des Antriebsschlupfes das Antriebsmoment verringert wird. Die Verringerung des Antriebsmoments wird entweder durch Verstellung des Verbrennungsmotors, also durch Drosselklappenverstellung oder durch Zündzeitpunktverstellung, oder durch Betätigen einer oder mehrerer Radbremse(n) realisiert. Auch eine Kombination beider Maßnahmen ist bekannt. Insbesondere können zusätzlich zur Verbrennungsmotorverstellung, die bei Überschreiten eines ersten Grenzwertes des Antriebsschlupfes erfolgt, die Radbremsen betätigt werden, wenn ein zweiter, höherer Grenzwert des Antriebsschlupfes erreicht wird.

Nachteilig an diesen bekannten Antriebsschlupfregelungen ist, daß einerseits die Motorverstellung langsam und träge erfolgt und andererseits die gesamte Antriebsschlupfregelung schlecht steuerbar ist, d.h. ein bestimmter zeitlicher Verlauf der Antriebsmomentverringerung praktisch nicht erzielt werden kann.

Aus der US-A- 5 431 241 ist es bekannt, für eine Antriebsschlupfregelung eine elektromagnetisch betätigte Reibungsbremse, die auf den Antriebsstrang wirkt, zu verwenden. Alternativ kann auch ein Wirbelstromretarder verwendet werden.

Aus der US-A-5 053 632 ist es allgemein bekannt, daß bei einem Kraftfahrzeug mit Verbrennungsmotor eine im Antriebsstrang sitzende, wechselrichtergesteuerte elektrische Maschine als Bremse fungieren kann.

Aus ATZ Automobiltechnische Zeitschrift 87 (1985) 11, S. 581 bis 584, N. Saridakis, "Golf mit Otto-Elektro-Hybridantrieb" ist die Möglichkeit einer generatorischen Nutzbremsung bei einem Hybridfahrzeug bekannt.

Der Erfindung liegt das technische Problem zugrunde, bekannte Antriebsschupfregelungen weiterzubilden und zu verbessern.

Dieses Problem wird gelöst durch ein Antriebssystem für ein Kraftfahrzeug, mit einem Antriebsaggregat in Form eines Verbrennungsmotors, wenigstens einer mit einer Antriebswelle gekoppelten elektrischen Maschine, und einer Antriebsschlupfregelung, bei welchem die elektrische Maschine eine wechselrichtergesteuerte Drehstrommaschine ist, die derart ausgelegt ist, daß mit ihr eine Antriebsschlupfverringerung durch Verkleinerung des Antriebsmoments herbeiführbar ist, wobei der Wechselrichter einen Zwischenkreis auf einem gegenüber einem Bordnetz erhöhten Spannungsniveau aufweist, und einem auf dem Zwischenkreisspannungsniveau liegenden Energiespeicher, der die bei der Antriebsmomentverkleinerung gewonnene Energie wenigstens teilweise aufnimmt.

Bei dem erfindungsgemäßen Antriebssystem wird die Antriebsschlupfverringerung im allgemeinen erst aktiv, wenn - ähnlich wie im Stand der Technik - eine bestimmte Bedingung erfüllt ist. Diese Bedingung kann das Überschreiten eines Grenzwertes des Antriebsschlupfes oder eines Grenzwertes der zeitlichen Änderung des Antriebsschlupfes sein. Die Bedingung kann aber auch komplexer definiert werden, etwa im Sinne einer Kombination beider oben genannten Bedingungen oder aber auch anderer Bedingungen.

Wird nun eine bestimmte Bedingung erfüllt, wird mittels der elektrischen Maschine kurzfristig (und nicht andauernd) das auf die Antriebsräder wirkende Antriebsmoment verringert.

Eine "elektrische Maschine" ist jede Art von Maschine für Rotationsbewegungen, die sowohl als elektrischer Motor wie auch als elektrische Bremse, ggf. als Generator betrieben werden kann.

Grundsätzlich kann die Kopplung der elektrischen Maschine mit einer Triebwelle des Antriebsaggregats mittelbar sein, z.B. über ein Getriebe. Vorzugsweise handelt es sich jedoch um eine direkte Kopplung, bei der z.B. der Läufer der elektrischen Maschine - ähnlich einem Schwungrad - unmittelbar auf der Welle oder einer ggf. koppelbaren Verlängerung der Welle sitzt und ohne Zwischenschaltung eines Getriebes (mit Ritzeln, Zugmittel oder ähnlichem) mit der Welle bzw. der Verlängerung drehfest gekoppelt oder koppelbar ist.

Die Antriebsschlupfregelung mit elektrischer Maschine ersetzt die aus dem Stand der Technik bekannte Antriebsschlupfregelung mit Motorverstellung oder Radbremsung oder wird in Kombination mit der aus dem Stand der Technik bekannten Antriebsschlupfregelung mit Motorverstellung und/oder Radbremsung verwendet. Diese verschiedenen Maßnahmen zur Antriebsschlupfverringerung müssen nicht gleichzeitig durchgeführt werden, sondern können nacheinander einsetzend - z.B. bei Überschreiten weiterer Grenzwerte - ausgeführt werden, insbesondere wenn einzelne Maßnahmen nicht wirksam genug sind. Beispielsweise können die - in besonderem Maße dem Verschleiß unterliegenden - Radbremsen erst in besonders kritischen Situationen eingesetzt werden.

Der bei generatorischem Betrieb erzeugte Strom kann teilweise z.B. über Heizwiderstände in Wärme umgesetzt (verheizt) werden.

Zwischen die elektrische Maschine und das Antriebsaggregat kann eine mechanische Kupplung geschaltet werden, die automatisch betätigbar ist und teilweise oder ganz geöffnet wird, wenn das Antriebsmoment verringert werden soll. Dann wirkt nur die elektrische Maschine bremsend und das Antriebsaggregat ist im wesentlichen von den Antriebsrädern abgetrennt.

Die Verringerung des Antriebsschlupfes kann durch Zulassen eines Kupplungsschlupfes bei als Kupplung wirkender elektrischer Maschine bzw. durch Vergrößern eines bereits vorhandenen Kupplungsschlupfes erfolgen. Falls darüberhinaus die als Kupplung wirkende elektrische Maschine eine mechanische Überbrückungskupplung aufweist, wird diese vorteilhaft zunächst gelöst und dann erst der Kupplungsschlupf zugelassen und vergrößert.

Grundsätzlich kann die Verringerung des Antriebsschlupfes nicht nur durch den Kupplungsschlupf - also passiv - reguliert werden, sondern von der elektrischen Maschine auch aktiv durch Erzeugen eines bremsenden - auf die die Antriebsräder antreibende Welle wirkenden - Gegendrehmoments.

Die elektrische Maschine ist eine Dreh- oder Wanderfeldmaschine. Unter Drehfeldmaschine wird - im Gegensatz zu einer Stromwendermaschine - eine Maschine verstanden, in der ein magnetisches Drehfeld auftritt. Hierbei kann es sich z.B. um eine Asynchron- oder Synchronmaschine für Dreiphasenstrom handeln. Bei einer Drehfeldmaschine überstreicht das magnetische Feld einen vollen 360°-Grad-Umlauf, bei einer Wanderfeldmaschine hingegen nur einen oder mehrere Ausschnitte (Sektoren) hiervon. Bei der Wanderfeldmaschine kann es sich also z.B. um eine Asynchron- oder Synchronmaschine handeln, deren Ständer sich nur über einen oder mehrere Sektoren des Läufers erstreckt - ähnlich einem bzw. mehreren gekrümmten Linearmotor(en).

Das Antriebssystem hat wenigstens einen Wechselrichter. Er kann die für die magnetischen Felder (insb. Dreh- bzw. Wanderfelder) benötigten Spannungen und/oder Ströme mit (innerhalb gewisser Grenzen) variabler Frequenz, Amplitude oder Phase oder beliebiger Kombinationen dieser Größen erzeugen. Er kann dies vorteilhaft mit Hilfe elektronischer Schalter aus einer vorgegebenen Gleich- oder Wechselspannung oder einem vorgegebenen Gleich- oder Wechselstrom tun (sog. Pulswechselrichter). Besonders vorteilhaft sind alle drei Größen - Frequenz, Amplitude und Phase - frei wählbar.

Vorzugsweise hat die elektrische Maschine außerdem die Funktion einer aktiven Verringerung von Drehungleichförmigkeiten.

Vorschläge für Vorrichtungen zur Verringerung von Drehungleichförmigkeiten eines Verbrennungsmotors offenbaren z.B. Patent Abstracts of Japan, Band 11, Nr. 28 (M-557), 27. Januar 1987 & JP-A-61 200 333 (NISSAN I), Patent Abstracts of Japan, Band 4, Nr. 29 (M-002), 14. März 1980 & JP-A-55 005 454 (TOYOTA), EP-B-0 427 568 (ISUZU), DE-A-32 30 607 (VW), EP-B-0 175 952 (MAZDA), Patent Abstracts of Japan, Band 7, Nr. 240 (M-251), 25. Oktober 1983 & JP-A-58 126 434 (NISSAN II), DE-A-41 00 937 (FICHTEL & SACHS), DE-A-40 38 301 (HITACHI/NISSAN), EP-A-0 440 088 (NISSAN III) und EP-A-0 604 979 (NIPPONDENSO).

Bei den Drehungleichförmigkeiten kann es sich insbesondere um solche handeln, die bei einem Verbrennungsmotor, insbesondere einem Hubkolbenmotor mit innerer Verbrennung, durch die auf die Triebwelle (d.h. insbesondere die Kurbelwelle) wirkenden Gas- und Massenkräfte der einzelnen Hubkolben auftreten. Beispielsweise treten bei einem Vierzylinder-Viertaktmotor relativ große Drehungleichförmigkeiten in der zweiten Ordnung (d.h. dem zweifachen der Drehfrequenz des Motors) auf. Daneben gibt es Drehungleichförmigkeiten bei höheren Ordnungen sowie stochastisch auftretende Ungleichförmigkeiten. Bei dem Verbrennungsmotor kann es sich z.B. um einen Zweitakt- oder Viertaktmotor mit gerader Zylinderzahl (z.B. 2, 4, 8, 10, 12 Zylinder usw.) oder ungerader Zylinderzahl (1, 3, 5, 7, 9, 11 usw. Zylinder) handeln (der z.B. nach dem Otto- oder dem Dieselprinzip arbeitet). Grundsätzlich kann es sich auch um einen andersartigen Verbrennungsmotor, wie z.B. einen Hubkolbenmotor mit äußerer Verbrennung (sog. Stirling-Motor) handeln. Eine andere Möglichkeit ist ein Kreiskolbenmotor (z.B. ein Wankelmotor), bei dem zumindest die Gaskräfte zu Drehungleichförmigkeiten führen können.

Das System ist aber nicht nur geeignet zur aktiven Verringerung von Drehungleichförmigkeiten, welche von einem Antriebsaggregat (z.B. eines Kraftfahrzeugs oder Schienenfahrzeugs) herrühren, wie es in den o.g. Beispielen der Fall ist. Es kann sich vielmehr auch um Drehungleichförmigkeiten handeln, die in einem Antriebsstrang - also zwischen dem Antriebsaggregat und dem Abtriebspunkt entstehen, etwa durch Kardangelenke, räumliche Wellenschwingungen oder Getriebeverschleiß.

Ein Antriebssystem könnte auch mit mehreren elektrischen Maschinen ausgerüstet sein, z.B. könnte bei einem Kraftfahrzeug eine erste Maschine direkt auf die Kurbelwelle des Antriebsaggregats (Verbrennungsmotors) wirken, während eine zweite Maschine abwärts der Kupplung, z.B. zwischen Kupplung und Getriebe angeordnet ist.

Die elektrische Maschine wird vorzugsweise so gesteuert, daß sie zur Drehungleichförmigkeits-Veringerung ein schnell variierendes, insbesondere alternierendes Drehmoment (Wechsel-Drehmoment) erzeugt, und zwar bei einer positiven Drehungleichförmigkeit ein bremsendes und bei einer negativen Drehungleichförmigkeit ein antreibendes Drehmoment. Im Vergleich hierzu variieren die Drehmomente, welche die elektrische Maschine für die ASR-Funktion (Bremsung oder Kupplungsschlupf) aufbringt, i.a. langsam; sie werden daher im folgenden als Gleich-Drehmomente bezeichnet. Die elektrische Maschine kann für weitere Funktionen zur Erzielung einer antreibenden Wirkung oder einer bremsenden oder generatorischen Wirkung zumindest zeitweise weitere positive oder negative Gleich-Drehmomente erzeugen.Gleichdrehmomente und das Wechseldrehmoment können einander (additiv) überlagert werden. Bei Ausgestaltungen, bei denen die elektrische Maschine außerdem als elektromagnetische Kupplung wirkt, kann an die Stelle des schnell alternierend bremsenden und antreibenden Drehmoments ein schnell variierend größerer und kleinerer Kupplungsschlupf treten.

Unter einer "schnellen Variation" wird eine Variation im Frequenzbereich der zu verringernden Drehungleichförmigkeiten verstanden, also z.B. bei der Drehungleichförmigkeit der 2. Ordnung und bei einer Drehzahl von 3000 min⁻¹ eine Variation mit einer Frequenz von 100 Hz. Demgegenüber variiert das ggf. überlagerte Gleich-Drehmoment - abgesehen von möglicherweise steilen Flanken am Anfang oder Ende der Überlagerung - im allgemeinen langsam (oder es ist sogar konstant).

Durch die (insbesondere additive) Überlagerung des Gleich-Drehmoments in der gewünschten Richtung und Stärke sind die Drehungleichförmigkeits-Verringerung und die Gleich-Drehmomenterzeugung voneinander entkoppelt. Das schnell variierende Drehmoment (Wechseldrehmoment) wird in seinem Verlauf durch die Überlagerung praktisch nicht verändert, nur gegenüber der Nullinie verschoben. Ausnahmsweise verändert sich das Wechsel-Drehmoment nur dann, falls der Verbrennungsmotor aufgrund der mit der Zuschaltung des Gleich-Drehmoments einhergehenden Laständerung tätsächlich geänderte Drehungleichförmigkeiten zeigt.

Falls das momentan gelieferte Gleich-Drehmoment kleiner als die momentane Amplitude des Wechsel-Drehmoments ist, zeigt das Gesamt-Drehmoment der elektrischen Maschine - wenn auch gegenüber der Nullinie verschoben - abwechselnd positive und negative Werte. Falls es hingegen größer ist, ist das Gesamt-Drehmoment nur positiv oder negativ, wobei dessen Betrag einen schnell variierenden Anteil enthält. Ein bremsendes Gleich-Drehmoment kann dazu dienen, daß die elektrische Maschine im Rahmen der Antriebs-Schlupf-Regelung durch Bremsen oder Kupplungsschlupf den Schlupf eines Antriebsrades verringert, als Generator zur Stromversorgung fungiert und/oder eine Bremsung des Fahrzeugs herbeiführt oder unterstützt. Die bei Anwenden dieser Bremsfunktionen generatorisch gewonnene Bremsenergie (Gleichdrehmoment-Bremsenergie) und die bei einer positiven Drehungleichförmigkeit anfallende Energie (Drehüngleichförmigkeits-Bremsenergie) wird zur Erzielung eines möglichst hohen Gesamtwirkungsgrades vorteilhaft wenigstens teilweise gespeichert (z.B. in einem elektrischen Speicher oder in einem Schwungradspeicher) und wiederverwendet, z.B. als Antriebsenergie, zur Versorgung eines Netzes zur Speisung der Fahrzeugbatterie und/oder zum Verringern negativer Drehungleichförmigkeiten. Ein antreibendes Gleich-Drehmoment kann beispielsweise eine Beschleunigung des Fahrzeugs unterstützen (die elektrische Maschine wirkt dann als "Booster") oder herbeiführen, beispielsweise um Beschleunigungslöcher, etwa bei einem Turbolader-Motor, zu füllen.

Die Speicherung der Wechseldrehmoment-Bremsenergie und/oder der Gleichdrehmoment-Bremsenergie kann insbesondere durch einen elektrischen Speicher oder einen mechanischen Speicher (Schwungradspeicher) erfolgen: Als elektrischer Speicher kann beispielsweise eine Kapazität, eine Induktivität und/oder eine (schnelle) Batterie dienen. Der Wechselrichter ist ein Zwischenkreis-Wechselrichter, dessen Zwischenkreis den elektrischen Speicher für Bremsenergie aufweist oder mit wenigstens einem solchen gekoppelt ist. Er kann entweder ausschließlich der Speicherung von Bremsenergie dienen (in diesem Fall wäre er i.a. zusätzlich zu einem üblicherweise vorhandenen Zwischenkreis-Speicher geschaltet, welcher die beim Wechselrichter-Taktbetrieb erforderlichen Spannungs- bzw. Stromimpulse liefern kann), oder er kann nur teilweise der Speicherung der Bremsenergie dienen, also noch andere Energie - etwa die zum Taktbetrieb nötige - speichern (im letzteren Fall könnte er mit dem üblichen Zwischenkreis-Speicher zusammenfallen).

Unter einem "Zwischenkreis" versteht man einen Kreis, welcher im wesentlichen Gleichspannung bzw. -strom liefern . kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß Spannungs- bzw. Stromimpulse mit extremer Flankensteilheit und auf hohem Spannungs- bzw. Stromniveau bereitstellen. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis.

Bei einem Schwungradspeicher kann vorzugsweise das Schwungrad elektrisch über eine (weitere) elektrische Maschine mit dem System gekoppelt sein. Hierbei kann es sich z.B. um eine von einem eigenen Stromrichter gesteuerte Drehfeld- oder Stromwendermaschine handeln. Die (erste) elektrische Maschine und die Schwungrad-Maschine arbeiten im Gegentakt: Wenn erstere bremsend wirkt, beschleunigt zweitere das Schwungrad bzw. wenn erstere antreibend oder weniger bremsend wirkt, bremst zweitere das Schwungrad. Mit einem solchen Schwungrad-Energiespeicher können relativ hohe Energiedichten gespeichert werden.

Wie oben im Zusammenhang mit dem Gleich-Drehmoment erwähnt wurde, kann die elektrische Maschine gleichzeitig oder zeitlich versetzt zur ASR-Funktion und zur ggf. vorhandenen Drehungleichförmigkeitsverringerung auch andere Funktionen ausführen und so herkömmlicherweise auf diese Funktionen spezialisierte Maschinen ersetzen. Insbesondere kann sie außerdem die Funktion eines Starters für das Antriebsaggregat und/oder die Funktion eines Generators zur Stromversorgung, z.B. zur Ladung einer Batterie oder Speisung eines Bordnetzes, haben. Wenn beide Funktionen realisiert sind, stellt die Maschine einen Starter/Generator dar, der die beiden entsprechenden, herkömmlicherweise gesonderten Maschinen ersetzen kann. Während des Startvorgangs ist i.a. keine Drehungleichförmigkeits-Verringerung erforderlich; hierzu wird die elektrische Maschine vorübergehend als reiner Elektromotor betrieben. Die Generatorfunktion kann hingegen auch während der Drehungleichförmigkeits-Verringerung erwünscht sein. Durch Überlagerung des Wechsel-Drehmoments mit einem gleichförmig bremsenden Moment erreicht man im zeitlichen Mittel einen Gewinn elektrischer Energie.

Grundsätzlich kann die elektrische Maschine für die Startfunktion als Schwungrad-Starter ausgebildet sein (siehe z.B. D. Henneberger "Elektrische Motorausrüstung", Braunschweig 1990, Seiten 98-103). Vorteilhaft ist sie jedoch so drehmomentstark ausgebildet, daß sie als Direkstarter dienen kann, d.h. daß sie den Verbrennungsmotor im Zusammenlauf aus dem Stand starten kann. Vorzugsweise ist sie direkt, d.h. getriebelos mit der Triebwelle gekoppelt. Die Drehzahl des Läufers gleicht dann vorzugsweise der Drehzahl des Antriebsaggregats. Vorteilhaft sitzt der Läufer (oder ggf. deren drehbar gelagerter Ständer) auf der Triebwelle (i.a. der Kurbelwelle) des Verbrennungsmotors oder einer (ggf. von ihr entkuppelbaren Verlängerung. Er ist vorzugsweise drehfest mit der Triebwelle bzw. der Verlängerung gekoppelt oder koppelbar.

In entsprechender Weise kann die elektrische Maschine auch als Zusatzfunktion neben der ASR-Funktion ein Beschleunigen und/oder Abbremsen der Welle herbeiführen oder unterstützen, um das Kraftfahrzeug (ggf. in Zusammenarbeit mit dem Antriebsaggregat) zu beschleunigen oder zu bremsen. Zum Abbremsen des Fahrzeugs kann die elektrische Maschine - wie eingangs erwähnt - als verschleißfreie, ggf. generatorische Bremse oder Zusatzbremse dienen.

Die bei Anwenden dieser Zusatzfunktionen gewonnene Bremsenergie kann - wie oben erwähnt - und z.B. als Antriebsenergie wiederverwendet oder in ein Netz oder z.B. die Fahrzeugbatterie eingespeist werden. Um bei der Fahrzeugbremsung mit Hilfe der elektrischen Maschine einen möglichst hohen Wirkungsgrad der Bremsenergie-Rückgewinnung zu erzielen, trennt man beim Bremsen vorteilhaft die elektrische Maschine vom Antriebsaggregat mit Hilfe einer dazwischengeschalteten, z.B. mechanischen Kupplung.

Zur Versorgung von Hochleistungsverbrauchern, wie Hilfsmaschinen (Klimamaschinen, Servoantriebe, Pumpen) und Heizungen ist es vorteilhaft, daß die elektrische Maschine Strom auf relativ hohem Spannungsniveau, vorzugsweise im oberen Bereich der Niederspannung, wo gerade noch nicht für besonderen Berührungsschutz gesorgt werden muß (z.B. etwa 60 V Gleichspannung) liefert. Geht man darüber hinaus, wird vorzugsweise ein Bereich von 250 - 450 Volt gewählt. Vorteilhaft werden die Hochleistungsverbraucher elektrisch (statt wie bisher mechanisch bzw. durch Abwärme) auf diesen hohen Spannungsniveaus angetrieben (bzw. beheizt). Derart hohe Spannungsniveaus liegen bei dem Zwischenkreis-Wechselrichter im Zwischenkreis bereits vor, und brauchen so nicht besonders für diesen Zusatzzweck erzeugt werden. Für Niederleistungsverbraucher kann ein kerkömmliches Niederspannungsbordnetz (12 V oder 24 V) vorgesehen sein.

Die aktive Verringerung von Drehungleichförmigkeiten beruht - wie gesagt - darauf, daß die elektrische Maschine positiven und/oder negativen Drehungleichförmigkeiten entgegenwirkt, also z.B. bei positiven Drehungleichförmigkeiten bremsend und bei negativen antreibend wirkt. Hierfür benötigt die Steuereinrichtung Information über den Zeitpunkt und ggf. den Betrag einer positiven bzw. negativen Drehungleichförmigkeit. Eine Möglichkeit, diese Information zu erhalten, liegt in einer Messung der momentanen Drehungleichförmigkeit oder einer anderen, mit ihr gekoppelten Größe. Beruht der Betrieb der elektrischen Maschine auf dieser Information, so handelt es sich um eine (rückgekoppelte) Regelung, da das tatsächliche Vorliegen einer Drehungleichförmigkeit zu einer unmittelbaren Rückwirkung auf diese Drehungleichförmigkeit führt. Als andere Möglichkeit verwendet man als Information für den Betrieb der elektrischen Maschine nicht die tatsächliche, sondern eine erwartete Drehungleichförmigkeit. Es handelt sich hierbei also um eine (nicht-rückgekoppelte) Steuerung. Beispielsweise kann man bei einem Verbrennungsmotor Betrag und Vorzeichen der momentanen Drehungleichförmigkeit als Funktion des (Kurbel)-Wellenwinkels und eines oder weiterer Betriebsparameter (z.B. Drehzahl und Drosselklappenstellung) einmal an einem Prototyp bestimmen bzw. per Rechner simulieren und mit dieser Information, gespeichert in Form eines Kennfeldes, jeden Serien-Verbrennungsmotor ausrüsten. Im Betrieb mißt das System dann den momentan vorliegenden Kurbelwellenwinkel und die weiteren Betriebsparameter (z.B. Drehzahl und Drosselklappenstellung), liest die dazugehörigen gespeicherten Kennfeldwerte für Betrag und Amplitude der erwarteten Drehungleichförmigkeit, und steuert über die Steuereinrichtung die elektrische Maschine entsprechend, um der Drehungleichförmigkeit entgegenzuwirken. Möglich sind auch Mischformen von Regelung und Steuerung. Die Meßgröße muß nicht unmittelbar die Drehungleichförmigkeit (ggf. abgeleitet aus einer Messung der Winkellage oder -geschwindigkeit als Funktion der Zeit) sein. Es kann sich vielmehr auch um eine (oder mehrere) andere Größe(n) handeln, die einen Schluß auf zumindest einen Teil der auftretenden Drehungleichförmigkeiten erlaubt, z.B. der Gasdruck in einem oder mehreren Motorzylindern des Verbrennungsmotors oder das momentane Drehmoment des Verbrennungsmotors, das z.B. mit Hilfe einer Drehmomentnabe gemessen werden kann.

Die elektrische Drehfeldmaschine bzw. Wanderfeldmaschine (oder Linearmaschine) des Systems ist vorzugsweise eine Asynchronmaschine, eine Synchronmaschine oder eine Reluktanzmaschine, insbesondere Für Drei-Phasen-Strom. Eine Asynchronmaschine hat i.a. einen relativ einfach aufgebauten Läufer (i. a. einen Läufer mit Kurzschlußwicklungen oder Wicklungen, deren Enden an Schleifringe geführt sind). Hingegen haben Synchronmaschinen Läufer mit ausgeprägten magnetischen Polen, die z.B. Permanentmagnete oder Elektromagnete, die z.B. über Schleifringe mit Strom gespeist werden. Reluktanzmaschinen gehören im weiteren Sinn zu den Synchronmaschinen. Insbesondere bei der Asynchronmaschine erfolgt die Steuerung der elektrischen Maschine vorzugsweise auf der Grundlage einer feldorientierten Regelung (sog. Vektorregelung). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt.

Bei der elektrischen Maschine samt zugehöriger Steuereinrichtung handelt es sich i. a. um ein Hilfssystem, das z.B. im Triebstrang eines Kraftfahrzeugs mit einem Verbrennungsmotor als Hauptsystem angeordnet ist. Wegen seines HilfsCharakters sollte es relativ zum Hauptsystem wenig Raum beanspruchen, sollte also möglichst kompakt aufgebaut sein. Die im folgenden genannten vorteilhaften Maßnahmen dienen - neben anderen vorteilhaften Zwecken - einem solch kompakten Aufbau.

Eine Maßnahme zur Erzielung hoher Kompaktheit liegt darin, daß die elektrische Maschine eine feine Polteilung, insbesondere wenigstens einen Pol pro 45°-Ständerwinkel aufweist. Bei einer kreisförmig geschlossenen (360°-)Maschine entspricht dies einer Gesamtzahl von wenigstens acht Polen. Besonders vorteilhaft sind noch feinere Polteilungen, entsprechend z.B. 10, 12, 14, 16 oder mehr Polen bei der kreisförmig geschlossenen Maschine. Eine feine Polteilung erlaubt es nämlich, die Wickelköpfe des Ständers klein auszubilden, und zwar sowohl in Axial- wie auch in Umfangsrichtung der Maschine, so daß die Maschine in Axialrichtung insgesamt kürzer ausgebildet sein kann. Auch kann bei feinerer Polteilung der Ständerrücken für den magnetischen Rückfluß dünner (und damit auch leichter) ausgebildet sein, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Insgesamt führt somit eine feinere Polteilung zu einer kompakteren und leichteren Maschine. Daneben sind wegen der geringeren Wickeldrahtlänge - kleinere Wickelköpfe benötigen weniger nicht-aktiven Wicklungsdraht - die Ohmschen Verluste geringer. Da ferner das Streufeld (das den Blindleistungsanteil wesentlich bestimmt) von der Wickelkopffläche abhängt, ist es bei feiner Polteilung relativ gering. Ein geringes Streufeld ist insbesondere bei der Drehungleichförmigkeits-Verringerung vorteilhaft, da hier - anders als bei einer üblichen elektrischen Maschine - dauernd zwischen Motor- und Generatorbetrieb hin- und hergewechselt wird und bei dem damit einhergehenden Umpolen laufend Blindleistung aufgebracht werden muß.

Bei schnell laufenden Drehfeld-Maschinen sind feine Polteilungen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz.

Um den Einfluß von Wirbelströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 mm oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt.

Als weitere Maßnahme, die zu einer kompakten Ausbildung beiträgt, weist die elektrische Maschine vorteilhaft eine innere Fluidkühlung auf. Bei dem Fluid kann es sich vorteilhaft um Öl handeln. Eine sehr effektive Kühltechnik besteht darin, die Maschine im Inneren ganz unter Öl zu setzen. Ein Nachteil hiervor ist jedoch, daß oberhalb ca. 500 U/min Turbulenzverluste auftreten, die oberhalb ca. 2000 U/min merkliche Ausmaße annehmen können. Um dem zu begegnen, erfolgt die Zufuhr des Kühlfluids vorteilhaft verlustleistungs- und/oder drehzahlabhängig, wobei es sich bei der Fluidkühlung vorzugsweise um eine Sprühfluidkühlung handelt. In der Maschine befindet sich dann immer nur im wesentlichen soviel Kühlfluid, wie momentan zur Abfuhr der Verlustleistung benötigt wird.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist.

An einer Welle mit Drehungleichförmigkeiten können oft auch Radialschwingungen auftreten, insbesondere an der Kurbelwelle. Um robust gegenüber Radialschwingungen zu sein, ist das System vorzugsweise so ausgebildet, daß die elektrische Maschine stark im Bereich magnetischer Sättigung arbeitet. Ein Maß für die magnetische Sättigung ist der Strombelag (bei maximalem Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm. Das Arbeiten stark im Sättigungsbereich erlaubt es, die Maschine mit einem relativ weiten Luftspalt auszubilden. Änderungen des Luftspaltes - wie sie bei Radialschwingungen auftreten - wirken sich wegen des Betriebs im Sättigungsbereich kaum aus.

Eine derart kompakt aufgebaute elektrische Maschine hat im allgemeinen eine relativ geringe Induktivität. Um hier dennoch beispielsweise mit Hilfe einer getakteten Spannung einen möglichst genau sinusförmigen Strom zum Erzeugen der elektrischen Dreh- bzw. Wanderfelder zu erzielen, arbeitet der Wechselrichter vorteilhaft zumindest zeitweise mit einer hohen Taktfrequenz, insbesondere 10 kHz bis 100 kHz und höher. Diese Maßnahme ist auch vorteilhaft zur Erzielung einer hohen zeitlichen Auflösung des Systems: Beispielsweise kann man mit einer Taktfrequenz von 20 kHz eine zeitliche Auflösung im Drehmomentverhalten der elektrischen Maschine von 2 kHz erzielen, mit der man eine Drehungleichförmigkeit bei 200 Hz wirksam verringern kann (200 Hz entsprechen zum Beispiel der vierten Ordnung bei 3000 U/min). Eine hohe Taktfrequenz trägt auch zu einer kompakten Bauweise des Wechselrichters selbst bei, denn sie erlaubt kleinere Zwischenkreiskondensatoren, die mit kurzen Leitungswegen unmittelbar neben den elektronischen Schaltern angeordnet werden können. Ferner können EMV-Filter (EMV: Elektromagetische Verträglichkeit) des Wechselrichters kleiner ausgeführt sein.

Als weitere vorteilhafte Maßnahme zur Erzielung einer kompakten Bauweise des Wechselrichters sind elektronische Schalter des Wechselrichters fluidgekühlt, vorzugsweise siedebadgekühlt. Als Siedebad-Kühlmittel kann beispielsweise ein Fluorkohlenwasserstoff verwendet werden. Bei der Siedebadkühlung verdampft das Kühlmittel an Wärmepunkten und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper. Daneben hat sie den Vorteil, daß zur Erreichung auch hoher Kühlleistung relativ geringe Temperaturdifferenzen ausreichen und zwar z.B. eine Differenz von 2-10° C gegenüber ca. 40 ° C bei Luftkühlung. Eine weitere kühltechnisch vorteilhafte Maßnahme besteht darin, mehrere elektronische Schalter des Wechselrichters, insbesondere 2 bis 20 und mehr, parallel zu schalten. Die Parallelschaltung führt zu einer verteilten Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter(MOS)-Feldeffekttransistoren, bipolare Transistoren und/oder bipolare Transistoren mit isoliertem Gateanschluß (IGBTs). Unter "schnellen" Halbleiterschaltern werden insbesondere solche verstanden, die maximale Taktfrequenzen von 10 bis 100 kHz oder mehr erlauben.

Der Wechselrichter erzeugt die für die magnetischen Felder der elektrischen Maschine benötigten Spannungen und/oder Ströme vorzugsweise durch Pulse, insbesondere auf der Grundlage von Pulsweiten- oder Pulsamplitudenmodulation. Bei konstanter Zwischenkreisspannung lassen sich durch sinusbewertete Pulsweitenmodulation bei hohen Taktfrequenzen aufgrund der Maschineninduktivität nahezu sinusförmige Ströme beliebig einstellbarer Frequenz, Amplitude und/oder Phase erzeugen. Bei der Pulsamplitudenmodulation geht man beispielsweise aus von einem Wechselrichter mit variabler Zwischenkreisspannung und erzeugt so Pulse verschiedener Amplituden.

Um bei dem System zu jedem Zeitpunkt die momentane Winkellage der Welle zu kennen, ist die elektrische Maschine oder die Welle vorteilhaft mit einem Läuferlage- bzw. Wellenlage-Geber ausgerüstet. Aus der Information über die momentane Winkellage kann auf die momentane Winkelgeschwindigkeit und -beschleunigung und damit auf momentane Drehungleichförmigkeiten geschlossen werden. Auf dieser Information kann - wie oben ausgeführt wurde - bei einem geregelten System die Drehungleichförmigkeits-Verringerung basieren. Bei einem gesteuerten System wird die Information über die momentane Winkellage und ggf. die momentane mittlere Drehzahl gebraucht, um den richtigen Erwartungswert aus dem Kennfeld auszulesen. Zur Gewinnung einer möglichst genauen Winkellage-Information kann insbesondere ein Drehtransformator (ein sog. Resolver) dienen, also ein Transformator mit winkelabhängigem Übertragungsverhältnis. Auch hochauflösende Kodierer sind für diesen Zweck einsetzbar, z.B. eine Kombination aus einem hochauflösenden Inkrementalgeber und einem einfachen Absolutgeber.

Zur Steuerung bzw. Regelung der elektrischen Maschine mit ASR-Funktion und ggf. weiteren Funktionen sind eine oder mehrere Sensoren und/oder eine oder mehrere aus sensorinformation abgeleitete Größen aus der folgenden Gruppe vorgesehen: Geschwindigkeit, Längs- und Querbeschleunigung jeweils des Fahrzeugs, Winkelstellung, Drehzahl, -Winkelbeschleunigung, jeweils eines oder mehrere Fahrzeugräder, Schlupf eines oder mehrerer Antriebsräder, Triebwellen-Winkelstellung, -Drehzahl, -Winkelbeschleunigung, Lastzustand, Temperatur, Abgaszusammensetzung, Verbrennungsluftmenge bzw. -masse, Drosselklappenstellung, Kraftstoffmenge, Einspritzzeitpunkt, Gasdruck, jeweils des Antriebsaggregats; zum Antrieb der elektrischen Maschine dienender Strom, Zwischenkreisspannung, Frequenz, Phase, Schaltzustände von Wechselrichterschaltern, jeweils des Wechselrichters (falls vorhanden); Winkelstellung, Drehzahl, Winkelbeschleunigung, Drehmoment, jeweils der elektrischen Maschine; Drehzahl der Getriebeabtriebswelle. Aus den elektrischen Größen Strom, Zwischenkreisspannung, Frequenz, Phase und/oder Schaltzustände von Wechselrichterschaltern kann ohne weitere Sensoren auf den mometanen Fluß, das momentane Drehmoment und die momentane Drehzahl geschlossen werden.

Herkömmlicherweise verwendet man in Antriebssystemen von Kraftfahrzeugen reibschlüssige Kupplungen, welche ein Anfahren des Kraftfahrzeugs mit Drehmomentwandlung ("schleifende Kupplung") in der Anfahrphase ermöglichen. Ihre weitere Aufgabe besteht darin, einen Gangwechsel durch Trennen des Antriebsaggregats von einem Schaltgetriebe und anschließendes Wiederverbinden mit einer durch Reibung bewirkten Drehzahlanpassung von Antriebsaggregat und Getriebe zu erlauben. Bekannt sind ferner hydrodynamische Kupplungen, zum Teil mit Wandlerfunktion.

Anstelle oder ergänzend zu solchen Kupplungen kann vorteilhaft die elektrische Maschine so gestaltet sein, daß sie als elektromagnetische Kupplung im Antriebsstrang wirkt. Bei einer "elektromagnetischen Kupplung" erfolgt die Momentübertragung über die Kupplung hinweg durch elektrische, magnetische oder elektromagnetische Kräfte. Es ist möglich, daß diese Art der Kraftübertragung nur zeitweise vorliegt. Zum Beispiel kann nach Erreichen gleicher Drehzahl der zu kuppelnden Wellen die Kraftübertragung von einer mechanischen Kupplung übernommen werden. Bei dieser Ausgestaltung kann die ASR-Funktion durch Kupplungsschlupf realisiert sein. Eine ggf. vorhandene mechanische Überbrückungskupplung muß hierbei schnell gelöst werden. Als Zusatzfunktion kann die elektromagnetische Kupplung einer aktiven Getriebesynchronisierung dienen.

Bei einer vorteilhaften Ausgestaltung umfaßt das System für die Funktion der elektromagnetischen Kupplung zwei elektrische Maschinen, also eine elektrische Doppelmaschine. Im Normalbetrieb - wenn das Antriebsmoment über den Antriebsstrang Drehmoment abgibt - fungiert die erste elektrische Maschine als Generator und die zweite als Motor, wobei die zum Betrieb des Motors benötigte elektrische Energie im wesentlichen von dem Generator bezogen wird. Die vom Antrieb gelieferte mechanische Drehenergie wird also bei dieser Ausgestaltung zunächst über ein Paar relativdrehender elektromagnetischer Wirkflächen (Ständer und Läufer der ersten elektrischen Maschine) in elektrischen Strom verwandelt und dann über ein zweites Paar relativdrehender elektromagnetischer Wirkflächen (Ständer und Läufer der zweiten elektrischen Maschine) wieder in mechanische Drehenergie, ggf. bei anderer Drehzahl und mit anderem Drehmoment zurückverwandelt. Die von der ersten Maschine abgegebene Energiemenge kann größer oder kleiner als die von der zweiten aufgenommene sein. Der Überschuß bzw. Unterschuß kann z.B. in einem Energiespeicher gespeichert bzw. aus einem solchen entnommen werden. Bei Antriebsschlupf wird das von der zweiten Maschine erzeugte Moment verringert - dies entspricht einem Kupplungsschlupf.

Bei der anderen vorteilhaften Ausgestaltung wird die Kupplung durch eine einzelne elektrische Maschine gebildet, welche wenigstens zwei drehbare elektromagnetische Wirkeinheiten (z.B. Läufer und drehbar gelagerten Ständer) aufweist, von denen eine mit einem antriebsseitigen Drehmomentübertrager (z.B. der vom Antriebsaggregat kommenden Antriebswelle) und die andere mit einem abtriebsseitigen Drehmomentübertrager (z.B. der zum Getriebe führenden Abtriebswelle) gekoppelt oder koppelbar ist. Die Maschine entspricht z.B. einer normalen Maschine mit Läufer und Ständer, welche zusätzlich zur Läuferrotation als Ganzes drehbar ist. Die als Ganzes drehbare Maschine kann zwischen Läufer und "Ständer" positive und negative Relativdrehmomente erzeugen. Auf diese Weise kann der Kupplungsschlupf zum Verschwinden gebracht werden und damit die Funktion einer herkömmlichen Kupplung nachgebildet werden. Beliebige Kupplungsschlupfwerte sind für die ASR-Funktion durch entsprechendes Ansteuern der elektrischen Maschine erreichbar.

Um die die elektrischen Verluste zu minimieren, sind die Drehmomentübertrager, welche die elektromagnetische Kupplung trennt, vorzugsweise mit einer Überbrückungskupplung, insbesondere einer mechanischen Kupplung, verbindbar. Hierbei kann es sich z.B. um eine reibschlüssige oder - da ihr Einkuppeln durch entsprechende Steuerung immer bei verschwindendem Kupplungsschlupf möglich ist - vorteilhaft um eine formschlüssige Kupplung, z.B. eine Klauenkupplung handeln. Statt eine gesonderte Kupplung vorzusehen, können auch die beiden Läufer der Doppelmaschine bzw. die beiden Wirkeinheiten der Einzelmaschine durch Axialverschiebung miteinander in Reib- oder Formschluß bringbar sein.

Bei vorteilhaften Ausgestaltungen ist der drehbare Ständer gegen Drehung festlegbar und ggf. von dem ihm zugeordneten Drehmomentübertrager entkoppelbar ausgebildet. Diese Festlegung und Entkopplung können mechanisch erfolgen, etwa durch Einrichten einer reib- oder formschlüssiger Kopplung zwischen dem Ständer und einem drehfesten Teil (z.B. dem Antriebsaggregat- oder Getriebegehäuse oder dem Fahrzeugchassis) und durch Lösen einer solchen Kopplung zwischen dem Ständer und dem Drehmomentübertrager. Alternativ kann diese Umschaltung von drehbarem auf festliegenden Ständer auf elektrischem Wege erfolgen, indem die besagte Wirkeinheit doppelt vorhanden ist, nämlich einmal permanent drehbar und drehfest mit dem Drehmomentübertrager verbunden, und einmal permanent gegen Drehung festgelegt, aber nicht mit dem Drehmomentübertrager verbunden. Je nachdem, welche der beiden doppelt vorhandenen Wirkeinheiten elektrisch aktiviert wird, wird der eine oder der andere Zustand gemäß den obigen Ausführungen erzielt. Ist der Ständer gegen Drehung festgelegt (bzw. ist der festgelegte elektrisch aktiv) und ist die Überbrückungskupplung geschlossen, so wirkt die elektrische Maschine wie die eingangs geschilderte Maschine, welche auf einer durchgehenden Welle im Triebstrang sitzt und die ASR-Funktion durch Bremswirkung erzielen kann.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine schematische Darstellung eines Steuerablaufs der ASR-Regelung;
- Fig. 2: eine unmaßstäblich-schematische Darstellung einer Ausführungsform des Systems;
- Fig. 3: eine schematische beispielhafte Darstellung der Funktionsweise des Systems bei aktiver Verringerung von Drehungleichförmigkeiten;
- Fig. 4: eine schematische Schnittdarstellung einer elektrischen Maschine mit Schnittebene senkrecht zur Axialrichtung zur Veranschaulichung verschiedener bei dem System verwendbaren Maschinentypen;
- Fig. 5: einen schematischen Schaltplan eines bei dem System verwendeten Wechselrichters;
- Fig. 6: eine schematische Darstellung einer elektrischen Doppelmaschine;
- Fig. 7: eine Darstellung einer Doppelmaschine gemäß Fig.1 mit gemeinsamem Ständerkörper;
- Fig. 8: eine schematische Darstellung einer elektrischen Maschine mit drehbaren elektromagnetischen Wirkeinheiten;
- Fig. 9: eine schematische Darstellung einer anderen elektrischen Maschine mit drehbaren elektromagnetischen Wirkeinheiten;
- Fig. 10: eine schematische Darstellung einer weiteren elektrischen Maschine mit relativdrehbaren elektromagnetischen Wirkeinheiten und einer feststehenden Wirkeinheit.

In den Figuren tragen im wesentlichen funktionsgleiche Teile gleiche Bezugszeichen.

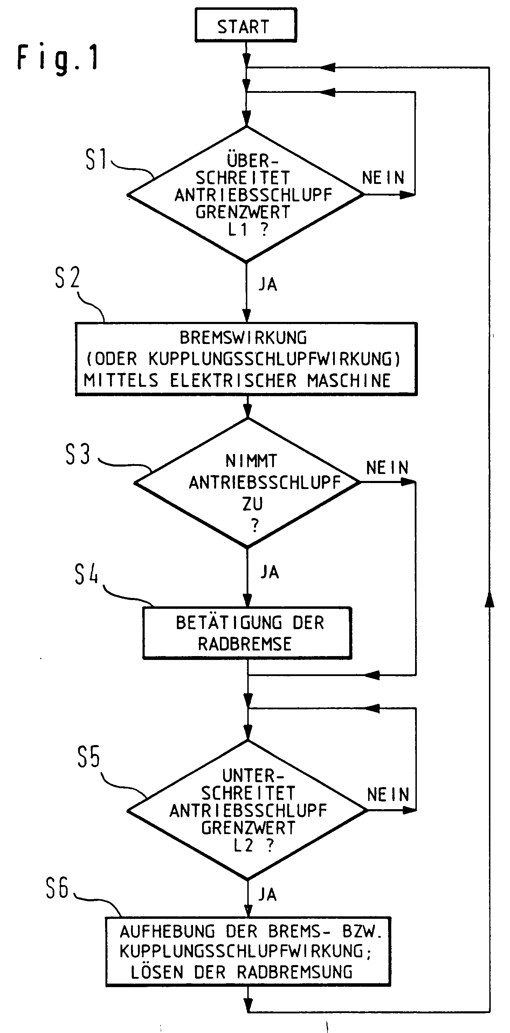

Der Steuerablauf der ASR-Regelung gemäß Fig. 1 durchläuft in einer quasi-endlosen Schleife Schritte S1 - S6.

Im Schritt S1 wird abgefragt, ob der Antriebsschlupf einen ersten Grenzwert L1 überschreitet. Der Antriebsschlupfwert wird beispielsweise bestimmt aus der Größe der zeitlichen Änderung der Antriebsraddrehzahl, bezogen auf die Fahrzeugbeschleunigung. Falls nein, kehrt die Steuerung in den Ausgangspunkt zurück, woraufhin der Schritt S1 wieder ausgeführt wird. Falls ja, erzeugt eine für den ASR-Eingriff sorgende elektrische Maschine im Schritt S2 eine bremsende Wirkung auf eine drehmomentübertragende Antriebswelle. Alternativ - im Fall einer Maschine, die als elektromagnetische Kupplung in der Antriebswelle wirkt - wird die Maschine so gesteuert, daß sie Kupplungsschlupf zuläßt. Im Schritt S3 wird abgefragt, ob sich der Antriebsschlupfwert weiter vergrößert. Falls nein, wird der folgende Schritt S4 übersprungen. Falls ja, werden im folgenden Schritt S4 als zusätzliche Maßnahme diejenigen Radbremsen betätigt, bei denen der Antriebsschlupf vorliegt. Im Schritt S5 wird abgefragt, ob der Antriebsschlupfwert einen zweiten Grenzwert L2 unterscheidet. Falls nein, kehrt der Steuerablauf vor den Schritt S5 zurück, so daß die bei S2 und ggf. S4 eingeleiteten Maßnahmen weiter aufrechterhalten bleiben. Falls ja, werden im Schritt S6 die Bremswirkung bzw. Kupplungsschlupfwirkung der elektrischen Maschine aufgehoben sowie ggf. die Radbremsen gelöst. Anschließend wird Schritt S1 wieder durchgeführt und das Steuerverfahren wird von neuem durchlaufen.

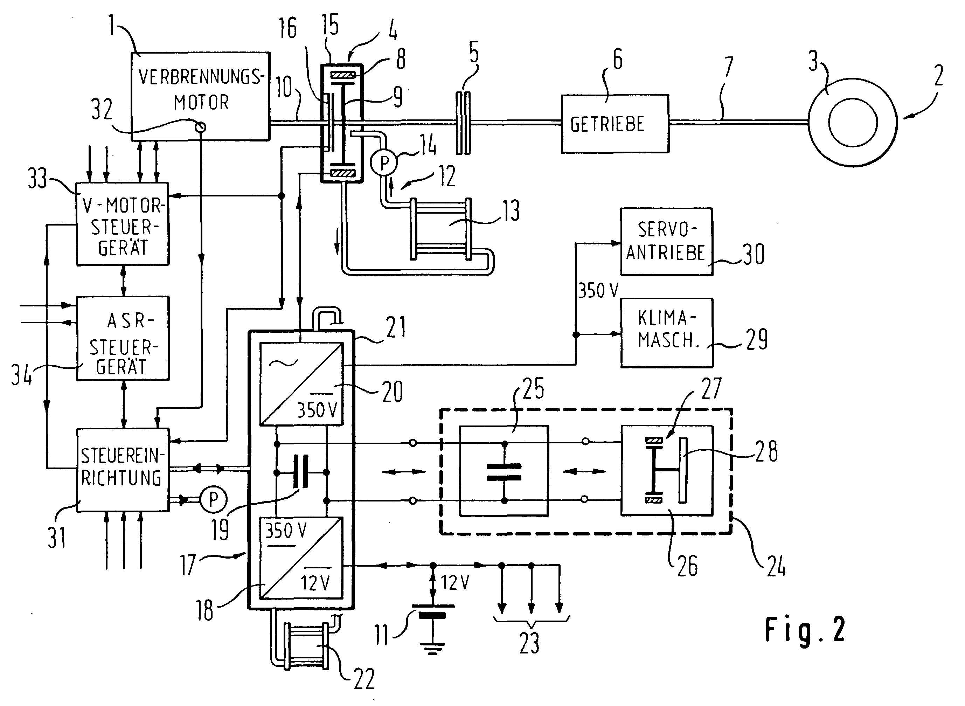

Das in Fig. 2 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 zunächst eine elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei der Kupplung 5 und dem Getriebe 6 kann es sich um eine Reibungskupplung und ein Schaltgetriebe handeln; alternativ sind z.B. eine automatische Kupplung oder Wandlerkupplung, jeweils mit Schaltgetriebe oder automatischem Getriebe möglich. Bei anderen (nicht gezeigten) Ausführungsformen ist im Antriebsstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlauf des Verbrennungsmotors 1 zu vermeiden.

Die elektrische Maschine 4 - hier eine Drehstrom-Wanderfeld-Maschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungs gehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren also gemeinsam, ohne Zwischenschaltung eines Getriebes.

Die elektrische Maschine 4 erfüllt mehrere Funktionen: Sie fungiert als Bremsvorrichtung im Rahmen einer ASR-Regelung wie im Zusammenhang mit Fig. 1 bereits erläutert wurde. Andererseits fungiert sie als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine 4 als Zusatzmotor ("Booster") fungieren, z.B. um den Verbrennungsmotor beim Beschleunigen des Fahrzeugs zu unterstützen. Auch dient sie als Starter für den Verbrennungsmotor und kann somit auch einen herkömmlicherweise beim Kraftfahrzeug gesondert vorgesehenen Starter ("Anlasser") ersetzen. Außerdem dient sie als Drehungleichförmigkeits-Verringerer. Schließlich fungiert sie aufgrund des Massenträgheitsmoments des Läufers 9 als Schwungrad und kann so das bei herkömmlichen Kraftfahrzeugen i.a. vorhandene, auf der Kurbelwelle sitzende Schwungrad ersetzen.

Die elektrische Maschine 4 ist durch eine Sprühflüssigkeitskühlung 12 innengekühlt. Nach Durchlaufen eines Kühlers 13 und einer Pumpe 14 wird die Kühlflüssigkeit - hier ein geeignetes Öl - an den Läufer 9, und zwar in der Nähe von dessen Rotationsachse, gesprüht. Sie wandert aufgrund der Läuferrotation fliehkraftbedingt nach außen und kühlt dabei Läufer 9 und Ständer 8, und verläßt dann ein Gehäuse 15 der elektrischen Maschine 4, um in einem geschlossenen Kreislauf wieder in den Kühler 13 einzutreten. Der Kühlmittelfluß erfolgt verlußtleistungs- und drehzahlabhängig durch entsprechende Steuerung der Pumpe 14, derart, daß sich jeweils im wesentlichen nur eine gerade benötigte Mindestmenge der Kühlflüssigkeit im Inneren des Gehäuses 15 befindet. Ein (nicht gezeigtes) Ausgleichsgefäß erlaubt diese Variation der Kühlflüssigkeitsmenge im Gehäuse 15. Bei anderen (nicht gezeigten) Ausführungsformen ist die elektrische Maschine (oder nur der Läufer) in ein Kupplungs- und/oder Getriebegehäuse integriert und wird durch ein darin befindliches Schmier- und/oder Kühlfluid (z.B. Kupplungs- oder Getriebeöl) mit gekühlt.

Die elektrische Maschine 4 ist außerdem mit einem Drehtransformator 16 (sog. Resolver) ausgerüstet, der vorzugweise mehr als 8 Pole, hier z.B. 12 Pole auweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet oder ganz auf einen entsprechenden Geber verzichtet.

Ein Wechselrichter 17 liefert dem Ständer 8 der elektrischen Maschine 4 bei einer sehr hohen Taktfrequenz (z.B. 10-100 kHz) sinusbewertete pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist.

Der Wechselrichter 17 ist ein Spannungszwischenkreis-Pulswechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 60 V oder 350 V) und in umgekehrter Richtung umsetzt, einen elektrischen Zwischenkreisspeicher 19, hier ein Kondensator bzw. eine Anordnung parallel geschalteter Kondensatoren, und einen Maschinen-wechselrichter 21 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem metallischen Gehäuse 21 hermetisch eingeschlossen, welches mit einem geeigneten Siedekühlmittel gefüllt ist. Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem geschlossenen Kreislauf in das Gehäuse 21 zurückkehren. Das Gehäuse 21 mit dem Kühlkreislauf ist hermetisch dicht.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechselrichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen. Bei anderen (nicht gezeigten) Ausführungsformen befindet sich die Fahrzeugbatterie auf Zwischenkreisniveau und ist direkt mit dem Zwischenkreis gekoppelt.

Der Zwischenkreisspeicher 19 ist verbunden mit einem externen Zusatzspeicher 24, bei dem es sich um einen elektrischen Speicher, hier eine Zusatzkapazität 25, und/oder einen Schwungradspeicher 26 handeln kann. Der Zusatzspeicher 24 hat in erster Linie die Aufgabe, die beim Drehungleichförmigkeits-Verrringern in einer Bremsphase gewonnene Energie zwischenzuspeichern und für die anschließende Antreibphase wieder abzugeben. Daneben kann er auch der Speicherung derjenigen Energie dienen, die bei anderen, durch die elektrische Maschine 4 vermittelten Bremsvorgängen (unter anderem ASR-Bremsungen) anfällt. Schließlich kann er die Fahrzeugbatterie 11 beim Startvorgang des Verbrennungsmotors 1 entlasten, indem dieser Energie nur langsam entnommen und im Zusatzspeicher 24 gespeichert wird. Hier steht sie dann für eine schnelle Entnahme beim Startvorgang zur Verfügung.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 *µ*F), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechseirichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheitsmoment der Schwungmasse 28 beträgt vorzugsweise 0,05 bis 2 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Bei anderen (nicht gezeigten) Ausführungsformen ist kein gesonderter Zusatzspeicher 24 vorgesehen. Hier ist der Zwischenkreisspeicher 19 so dimensioniert und ggf. außerhalb des Wechselrichters 17 angeordnet, daß er die Funktionen des Zusatzspeichers 24 mit übernehmen kann.

Der Zwischenkreis mit seinem hohen Spannungsniveau (hier 60 V bzw. 350 V) versorgt verschiedene Hochleistungsverbraucher, wie eine Klimamaschine 29 und Servoantriebe 30 mit elektrischer Energie. Während derartige Hochleistungsverbraucher herkömmlicherweise durch mechanische Kopplung vom Verbrennungsmotor 1 angetrieben werden, erlaubt das hier zur Verfügung stehende hohe Spannungsniveau einen wirkungsgradmäßig günstigeren, rein elektrischen Antrieb.

Eine Steuereinrichtung 31 gibt dem Wechselrichter 17 durch entsprechende Ansteuerung seiner Halbleiterschalter zu jedem Zeitpunkt vor, welche Amplitude, Frequenz und Phase die von ihm zu erzeugende Wechselspannung haben soll. Die Steuereinrichtung 31, die beispielsweise durch ein entsprechend programmiertes Mikrocomputer-System gebildet sein kann, bestimmt zunächst den Betrag und die Richtung des Drehmoments, welches die elektrische Maschine 4 zu einem bestimmten Zeitpunkt erzeugen soll. Sie tut dies auf der Grundlage von ASR-Information, die Sie von einem ASR-Steuergerät 34 erhält. Für die Zusatzfunktion Drehungleichförmigkeits-Verringerung. Sie kann dies z.B. mit Hilfe einer Kennfeldsteuerung tun, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält und aus einem gespeicherten Kennfeld die momentan zu erwartende Drehungleichförmigkeit in Abhängigkeit von diesen Betriebsparametern ermittelt. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/oder durch Auswertung der momentan im Verbrennungsmotor 1 vorliegenden Gasdrücke, welche mit Hilfe von Gasdrucksensoren 32 detektierbar sind, sowie durch Erfassung des momentanen Drehmoments des Verbrennungsmotors 1 mit Hilfe einer (nicht gezeigten) Drehmomentnabe im Antriebsstrang. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, dem ggf. ein positives oder negatives Gleich-Drehmoment gewünschter Stärke additiv überlagert wird. Zum Starten des Verbrennungsmotors 1 kann das Soll-Drehmoment auf der Grundlage gespeicherter Werte bestimmt werden, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt.

In einem zweiten Schritt bestimmt die Steuereinrichtung 31, welche Amplitude, Frequenz und Phase der Spannung bzw. des Stroms vom Wechselrichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet.

In Fig. 2 ist die Steuereinrichtung 31 als außerhalb des Wechselrichtergehäuses 21 angeordnet dargestellt. Um die Zuleitungsinduktivitäten gering zu halten und auch an der Siedebadkühlung zu partizipizieren, ist sie jedoch bei anderen (nicht gezeigten) Ausführungsformen im Inneren des Wechselrichtergehäuses 21 angeordnet.

Die Steuereinrichtung 31 teilt verschiedene, zur Erfüllung ihrer Steueraufgaben dienende Sensoren bzw. davon abgeleitete Sensorinformationen mit einem Motorsteuergerät 33 zur Steuerung des Verbrennungsmotors 1. Im einzelnen handelt es sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe).

Außerdem kommuniziert die Steuereinrichtung 31 mit einer Vielzahl weiterer Steuergeräte: Das ASR-Steuergerät 34 gibt der Steuereinrichtung 31 bei Vorliegen von Antriebsschlupf vor, daß die elektrische Maschine 4 vorübergehend als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupfinformation an das Motorsteuergerät 33 übergeben, um außerdem eine Verringerung des Verbrennungsmotor-Drehmoments zu veranlassen. Ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 eine entsprechende globale Drehmomentverstellung ΔMe (siehe Fig. 1c) veranlassen kann. Das Motorsteuergerät 33 gibt der Steuereinrichtung 31 vor, ob die elektrische Maschine 4 zusätzlich zu ihrer Schwingungsverringerungs-Funktion fahrzeugbeschleunigend oder -bremsend wirken soll, so daß diese eine entsprechende globale Drehmomentverschiebung ΔMe veranlassen kann und ggf. die Drehungleichförmigkeits-Verringerungsfunktion vorübergehend abschalten kann. Das Motor-steuergerät 33 führt auch eine automatische Start-Stop-Steuerung durch und gibt der Steuereinrichtung 31 vor, ob die elektrische Maschine 4 den Verbrennungsmotor 1 starten soll. Bei anderen (nicht gezeigten) Ausführungsformen wird die ASR-Steuerung vom Motorsteuergerät 33 oder von der Steuereinrichtung 31 übernommen. Ein gesondertes ASR-Steuergerät kann dann entfallen.

Bei jeder Art von Bremsen gewonnene Energie wird im Zusatzspeicher 24 gespeichert, um zum späteren Antreiben der elektrischen Maschine 4 wiederverwendet oder der Fahrzeugbatterie 11 zugeleitet zu werden.

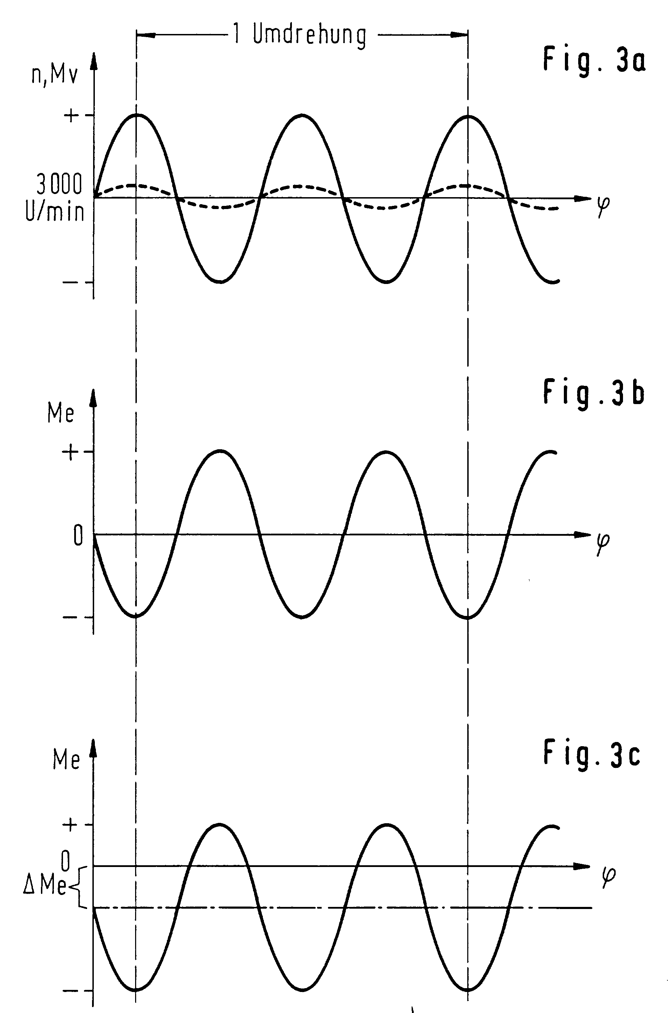

Fig. 3a veranschaulicht die aktive Drehungleichförmigkeits-Verringerung. Die durchgezogene Linie zeigt die Drehzahl n der Triebwelle 10 als Funktion des Kurbelwellenwinkels ϕ. Die Welle führt um eine mittlere Drehzahl (hier 3000 Umdrehungen pro Minute) periodisch Drehzahlschwankungen zu kleineren und größeren Drehzahlen hin aus, welche in diesem idealisierten Beispiel insgesamt einen im wesentlichen sinusförmigen Verlauf haben. Bei der Welle handelt es sich beispielsweise um die Kurbelwelle eines Vierzylinder-Viertakt-Verbrennungsmotors eines Kraftfahrzeugs, die in der zweiten Ordnung (d.h. bei einer Frequenz von 100 Hz) eine relativ große, von den Gas- und Massenkräften herrührende Drehungleichförmigkeit aufweist. Zur Veranschaulichung ist auch das für eine Umdrehung der Welle benötigte Winkelintervall eingezeichnet. Im allgemeinen treten bei einer Welle außerdem (hier nicht dargestellte) Drehungleichförmigkeiten höherer Ordnungen und solche stochastischer Natur auf. Ihr Verlauf ist also i.a. nicht sinusförmig.

Im wesentlichen proportional zu den Drehungleichförmigkeiten sind Schwankungen des Drehmoments Mv des Verbrennungsmotors um ein mittleres Drehmoment. Die durchgezogene Linie in Fig. 1a veranschaulicht damit auch den Verlauf des Motor-Drehmoments Mv als Funktion des Kurbelwellenwinkels ϕ.

Fig. 3b veranschaulicht das Gesamt-Drehmoment Me als Funktion des Wellenwinkels ϕ, das von einer mit der Welle gekoppelten elektrischen Maschine aufgebracht wird. Der Verlauf des Maschinendrehmoments Me entspricht weitgehend dem der Drehungleichförmigkeit und des Motor-Drehmoments Mv, ist jedoch entgegengesetzt gerichtet. D.h., bei einer Drehungleichförmigkeit zu höheren Drehzahlen hin (sog. positive Drehungleichförmigkeit) erzeugt die elektrische Maschine ein die Welle bremsendes Drehmoment (sog. negatives Drehmoment), wohingegen sie bei einer Drehungleichförmigkeit zu niederen Drehzahlen hin (sog. negative Drehungleichförmigkeit) ein antreibendes Drehmoment (sog. positives Drehmoment) erzeugt. Der Betrag des Drehmoments Me ist so gewählt, daß die Drehungleichförmigkeit - und die zu ihr proportionale Schwankung des Drehmoments Mv - durch dessen Wirkung wesentlich verringert wird oder sogar praktisch verschwindet, wie in Fig. 1a durch die gestrichelte Linie veranschaulicht ist.

Bei der in Fig. 3b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also in dieser Betriebsweise als reiner Drehungleichförmigkeits-Verringerer mit schnell variierendem Drehmoment, ohne Erzeugung eines Gleich-Drehmoments.

Ein Beispiel für eine demgegenüber modifizierte Betriebsweise des Systems mit Gleich-Drehmoment ist in Fig. 3c gezeigt: Der zeitliche Verlauf des Gesamt-Drehmoments Me entspricht dem von Fig. 1b, es ist jedoch global um einen bestimmten Betrag ΔMe (den sog. Hub) in negative Richtung verschoben. Der Hub ΔMe wird im allgemeinen langsam variieren, in dem hier dargestellten kurzen Zeitrahmen von ungefähr einer Umdrehungsperiode ist er jedoch in guter Näherung konstant. Der Hub ΔMe ist hier kleiner als die Amplitude der schnelle Variation des Drehmoments, so daß das Gesamt-Drehmoment Me alternierend positive und negative Werte annimmt. Gemittelt über die schnelle Drehmomentvariation erhält man ein konstantes Drehmoment -ΔMe. Dem Verbrennungsmotor wird also im Mittel mechanische Energie entzogen, die weitgehend in elektrische Energie umgewandelt und dem System entnommen wird. Die elektrische Maschine hat also in dieser Betriebsart neben der Funktion als Drehungleichförmigkeits-Verringerer die Funktion eines elektrischen Generators, der als Bremse wirken kann und Strom z.B. zum Ausgleichen der Betriebsverluste des Systems, zum Laden der Fahrzeugbatterie und/oder zum Betreiben elektrischer Verbraucher liefern kann.

Falls der Hub ΔMe größer als die Amplitude zur Verringerung der Drehungleichförmigkeit ist, wirkt die elektrische Maschine nur noch bremsend und nicht mehr antreibend, wobei die Bremswirkung in ihrem Betrag entsprechend Fig. 1b und 1c gegenphasig zur Drehungleichförmigkeit variiert.

Allein durch eine entsprechende Einstellung der (Software-)Steuerung der elektrischen Maschine - ohne jegliche konstruktive (Hardware-)Änderungen - sind kleine und sehr große Generatorleistungen einstellbar. Begrenzend wirkt nur die Größe der elektrischen Maschine. Damit kann ein und der selbe Maschinentyp beispielsweise für kleine und große Kraftfahrzeugtypen ohne konstruktive Anpassung verwendet werden.

Der globale Drehmomentverlauf kann auch in positiver Richtung verschoben sein (positiver Hub). Die elektrische Maschine arbeitet dann neben ihrer Funktion als Drehungleichförmigkeits-Verringerer als (antreibender) Motor, z.B. um den Verbrennungsmotor bei einer Fahrzeugbeschleunigung zu unterstützen.

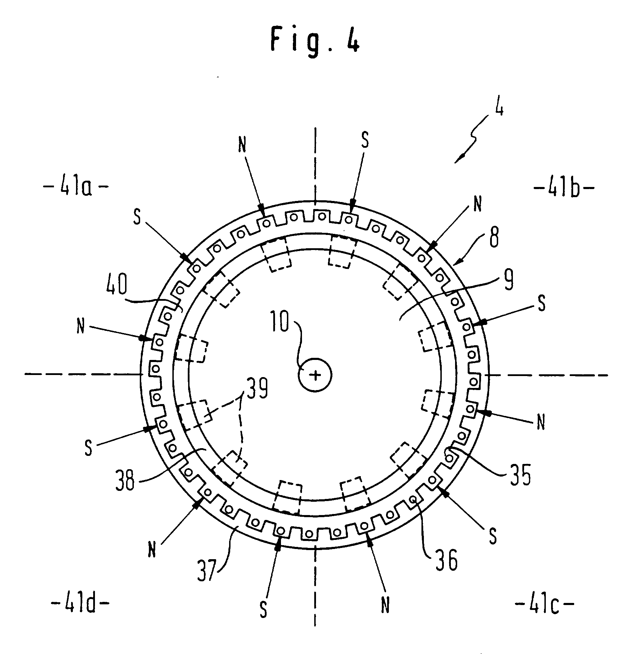

Die in Fig. 4 näher dargestellte elektrische Maschine 4 ist bürsten- bzw. schleiferlos und damit verschleißfrei. Sie hat einen Außendurchmesser von ungefähr 250 mm und eine Länge in Axialrichtung von 55 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8, welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffekten pro Pol wenigstens sechs, vorzugsweise neun Nuten vorhanden.) Die Pole laufen mit der Drehstrom-Oszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender Rücken 37 ist in Radialrichtung relativ dünn, seine Dicke beträgt (an der Stelle einer Nut 35) vorzugsweise 3-25 mm. Der Ständer 8 ist aus dünnen Statorblechen (die Dicke beträgt hier 0,25 mm) aus einem Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Bei der Synchronmaschine trägt der Läufer 9 eine entsprechende Zahl von Polen wie der Ständer 8 (hier zwölf Pole), die durch Permanentmagnete oder entsprechend erregte Spulen gebildet sein können. In Fig. 3 ist die Synchronmaschine ebenfalls veranschaulicht, indem die bei ihr vorhandenen Läuferpole (Bezugsziffer 39) schematisch angedeutet sind.

Der Luftspalt 40 zwischen Läufer 9 und Ständer 8 ist relativ groß; seine Weite beträgt 0,25 bis 2,5 mm, vorzugsweise 0,5 bis 1,5 mm.

Bei anderen (nicht gezeigten) Ausführungsformen ist der Läufer außenliegend und der Ständer innenliegend.

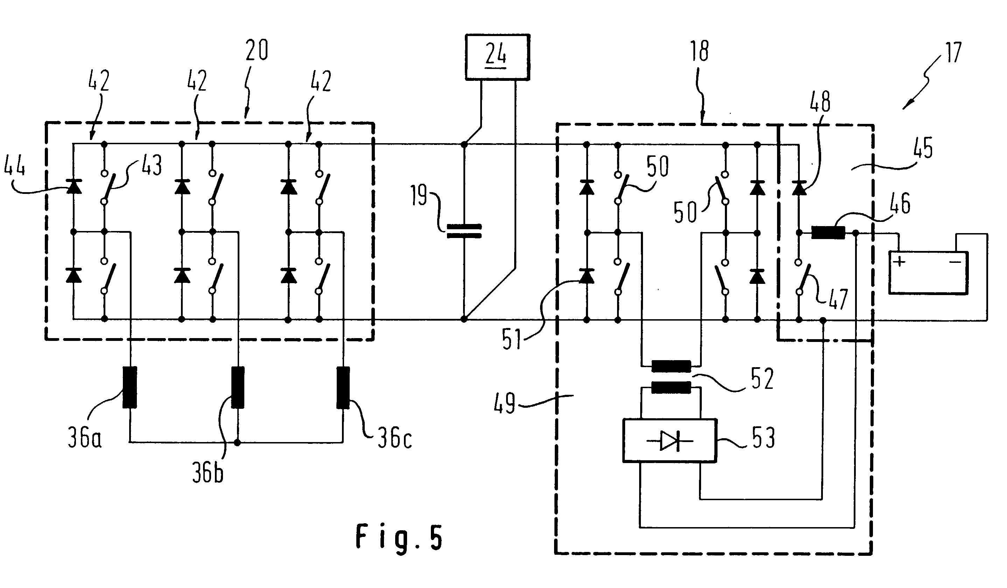

Fig. 5 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 parallelgeschaltet ist. Die Kapazität symbolisiert eine Parallelschaltung mehrerer Kondensatoren.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und dem Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60 V bzw. 350 V) bringen kann, und eine andere, welche - umgekehrt - elektrische Energie von dem hohen Spannungsniveau (60 V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlossenem Schalter 47 fließt ein Kreisstrom vom Plus- zum Minus pol der Fahrzeugbatterie 11. Nach Öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (60 V bzw. 350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

Bei anderen (nicht gezeigten) Ausführungsformen übernimmt ein - von einem herkömmlichen Motor-Managementsystem abgeleitetes - Motor-Steuergerät die Funktionen der Steuereinrichtung 31, die dann entfallen kann.

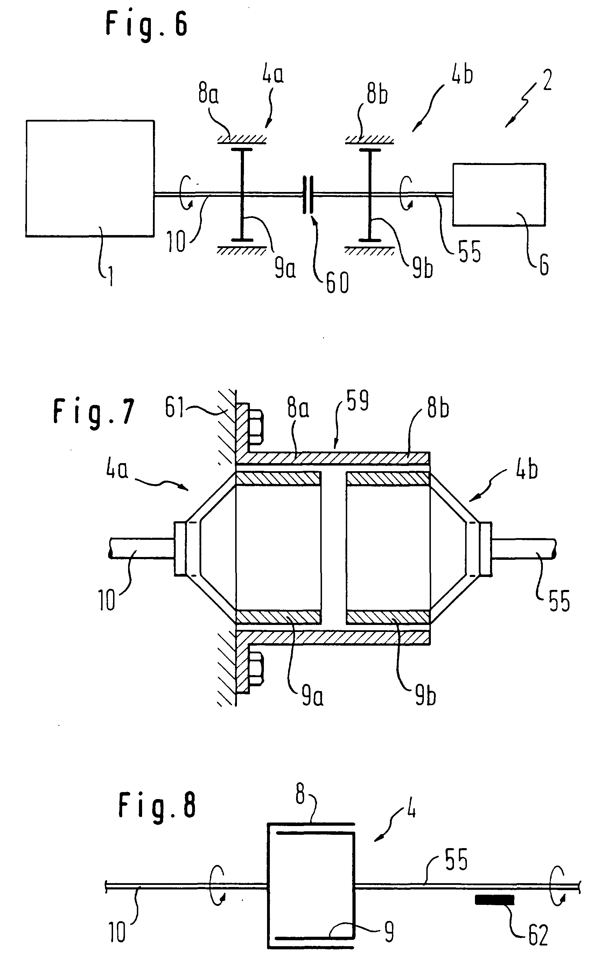

Eine elektrische Doppelmaschine 4 gemäß Fig. 6, welche zusätzlich die Funktion einer elektromagnetischen Kupplung und ggf. einer Synchronisiereinrichtung für ein nachgeschaltetes Getriebe ausführen kann, sitzt im Antriebsstrang 2 zwischen der Antriebswelle, z.B. der Triebwelle 10 des Verbrennungsmotors 1, und der Abtriebswelle, z.B. der mit einem Getriebe 6 gekoppelten Getriebewelle 55. Sie umfaßt zwei elektrische Maschinen 4a, 4b mit jeweils einem drehfesten Ständer 8a, 8b und jeweils einem mit der An- bzw. Abtriebswelle drehenden Läufer 9a, 9b. Die Läufer 9a, 9b - und damit die An- und Abtriebswelle - sind mit Hilfe einer mechanischen Überbrückungs-Kupplung 60 - hier einer form- oder reibschlüssigen Kupplung - fest mechanisch miteinander verbindbar. Diese ist vorzugsweise in gesteuerter Weise betätigbar, z.B. mechanisch, elektrisch, magnetisch, elektromagnetisch, hydraulisch oder pneumatisch. Bei anderen Ausführungsformen ist die Überbrückungs-Kupplung 60 nicht vorhanden.

Fig. 7 zeigt eine Fig. 6 entsprechende Doppelmaschine 4, bei der die Läufer 9a, 9b in koaxialer Anordnung in einem gemeinsamen Ständerkörper 59 angeordnet sind, der die beiden (elektrisch getrennten oder trennbaren) Ständer 8a, 8b aufnimmt und drehfest z.B. an einem Kurbelgehäuse 61 des Verbrennungsmotors 1 befestigt ist. Die (hier nicht dargestellte) Überbrückungskupplung kann z.B. dadurch realisiert sein, daß die Läufer 9a, 9b durch Axialverschiebung miteinander in Form- oder Reibschluß gebracht werden können. Alternativ kann sie durch z.B. durch eine in die Läufer 9a, 9b integrierte Reib- oder Klauenkupplung gebildet sein.

Bei der Doppelmaschine 4 der Fig. 6 und 7 erfolgt der ASR-Eingriff dadurch, daß die abtriebsseitige Maschine 4b im Antriebsschlupffall weniger antreibendes Moment erzeugt. Die entspricht einem Kupplungsschlupf.

Eine elektrische Einzelmaschine 4 gemäß Fig. 8, welche die Funktion einer elektromagnetischen Kupplung und ggf. einen Synchronisiereinrichtung hat, weist ein inneres und ein äußeres elektromagnetisches Wirkelement auf, die in Anlehnung an bei elektrischen Maschinen üblichen Bezeichnungsweisen hier Läufer 9 und Ständer 8' genannt werden. Der Läufer 9 ist drehfest mit der Abtriebswelle 55 und der Ständer 8' ist drehfest mit der Triebwelle 10 verbunden (bei anderen - nicht gezeigten - Ausführungsformen ist diese Zuordnung umgekehrt). Die elektrische Maschine 4 ist also zusätzlich zur Läuferdrehung als Ganzes drehbar; der Begriff "Ständer" ist also angesichts dessen Drehbarkeit nur in einem übertragenen Sinn zu verstehen. Während es bei einer feststehenden elektrischen Maschine - z.B. einer Drehfeld-Maschine - möglich ist, die Stromzufuhr auf das feststehende Wirkelement (d.h. den Ständer) zu beschränken und im drehbaren Wirkelement (d.h. im Läufer) Ströme ohne Stromzufuhr nur durch Induktion hervorzurufen, wird hier - wo beide Wirkelemente drehbar sind - wenigstens einem von ihnen (hier dem Ständer 8') Strom über drehbewegliche elektrische Verbindungen (z.B. über hier nicht gezeigte Schleifer/Schleifring-Kontakte) zugeführt. Die Abtriebswelle 55 ist mit einer mechanischen Kupplung, hier einer gegen das Fahrzeugchassis oder das Getriebegehäuse abgestützten Bremse 62 gegen Drehung festlegbar. Die gezeigte Ausführungsform hat keine Überbrückungskupplung, andere (nicht gezeigte) Ausführungsformen sind jedoch mit einer reib- oder kraftschlüssigen Überbrückungskupplung zur mechanischen Verbindung der Wellen 10, 55 ausgerüstet. Die Maschine 4 kann im oder am Motorgehäuse, Getriebegehäuse oder an beliebiger anderer Stelle im Antriebsstrang 2 plaziert sein.

Bei der elektrischen Einzelmaschine 4 beruht der ASR-Eingriff auf dem Zulassen von Kupplungschlupf im Antriebsschlupffall. Bei zu großem Antriebsrad-Schlupf wird der Kupplungsschlupf augenblicklich vergrößert und damit das an den Antriebsrädern anliegende Moment verkleinert wird. Falls eine Überbrückungskupplung vorhanden ist, wird diese vorher ausgekoppelt.

In der Funktion als Schaltkupplung und ggf. als Anfahrkupplung wird ein Gleichlauf der Wellen 10, 55 durch eine solche Einstellung der drehmomenterzeugenden magnetischen Felder der Maschine 4 erzielt, daß Drehzahlgleichheit zwischen den Wellen 10,55 herrscht, also der Kupplungsschlupf zwischen Ständer 8' und Läufer 9 genau verschwindet. Bei einer Asynchronmaschine wird dies beispielsweise durch die Regelung bzw. Steuerung des magnetischen Schlupfes eines entgegen der Antriebsdrehmoment-Richtung umlaufenden Drehfelds geeigneter Frequenz und Amplitude erzielt. Eine (hier nicht dargestellte) formschlüssige Überbrückungskupplung eliminiert bei verschwindendem Kupplungsschlupf die elektromagnetischen Verluste.

Die aktive Getriebesynchronisierung dient dazu, die Abtriebswelle 55 während eines Gangwechsels so zu beschleunigen oder abzubremsen, daß die in Kämmung zu bringenden Getriebezahnräder gleiche Umfangsgechwindigkeiten haben. Diese Funktion kann bei Ausführungsformen der Einzelmaschine 4 auch ohne Kupplungsfunktion realisiert sein kann - erfolgt hier in Abstützung gegen die mit der variablen Drehzahl des Verbrennungsmotors 1 drehende Triebwelle 10. Der Beitrag dieser Drehung wird bei der Bestimmung und Steuerung der für die jeweilige Synchronisation nötigen Relativdrehzahl der Maschine 4 berücksichtigt.

Eine Verringerung von Drehungleichförmigkeiten der Triebwelle 10 kann im Stand des Fahrzeugs in Abstützung gegen den dann mit Hilfe der Bremse 62 gegen Drehung festgelegten Läufer 9 erfolgen. Bei angetriebener Fahrt können bei nicht eingekuppelter (oder nicht vorhandener) Überbrückungskupplung Drehungleichförmigkeiten der Abtriebswelle 55 durch schnelles Variieren des übertragenen Drehmoments verringert werden, und zwar durch dessen Verkleinerung (d.h. einer Vergrößerung des Kupplungsschlupfes) bei positiver Drehungleichförmigkeit und dessen Vergrößerung (d.h. einer Verkleinerung des Kupplungsschlupfes) bei negativer. Zusatzbeschleunigung oder -bremsung ist bei nicht eingekuppelter Überbrückungskupplung durch Erzeugung entsprechenden Drehmomente - oder anders ausgedrückt - kleineren oder größeren Kupplungsschlupfes möglich. Eine Generatorfunktion zur Stromerzeugung wird durch dauernd aufrechterhaltenen Kupplungsschlupf erzielt.

Die elektrische Maschine 4 kann den Verbrennungsmotors 1 direkt in Abstützung gegen die durch die Bremse 62 festgelegte Abtriebswelle 55 starten. Bei einer anderen Ausführungsform, bei der die Maschine 4 hierfür kein ausreichendes Drehmoment aufbringt, kann sie unter Ausnutzung der elektromagnetischen Kupplungsfunktion als verschleißfreier Schwungradstarter dienen. Hierzu beschleunigt die elektrische Maschine 4 zunächst bei nicht eingelegtem Gang und gelöster Bremse 62 den dann freilaufenden Läufer 9 zusammen mit der Abtriebswelle 55 in Abstützung gegen die Triebwelle 10 und die Kompression des noch nicht laufenden Verbrennungsmotors 1 auf eine relativ hohe Drehzahl, z.B. auf 2000 U/min. Dann wird die elektrische Maschine 4 innerhalb kurzer Zeit so umgesteuert, daß sie ein bremsendes Moment, also Kraftschluß zwischen dem Läufer 9 und dem Ständer 8' herstellt. Dadurch werden der Läufer 9 mit der Abtriebswelle 55 und der Ständer 8' mit der Triebwelle 10 schnell auf eine gemeinsame mittlere Drehzahl (z.B. 800 U/min) gebracht und der Verbrennungsmotor 1 gestartet.

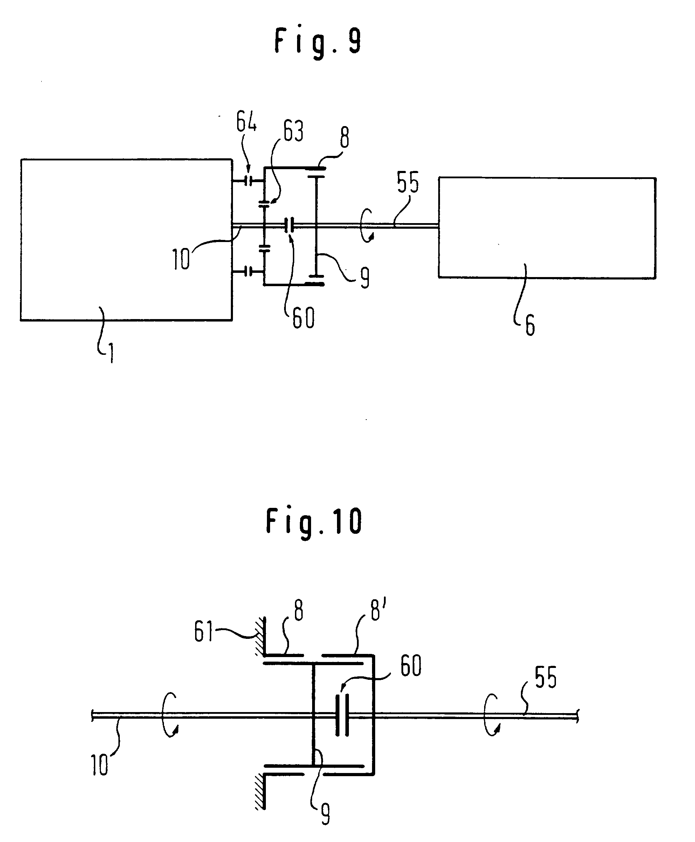

Fig. 9 zeigt eine Weiterbildung der elektrischen Maschine mit drehbaren Wirkeinheiten gemäß Fig. 8. Bei ihr ist der Ständer 8' nicht dauernd mit der Triebwelle 10 gekoppelt, sondern kann in steuerbarer Weise drei verschiedene Kopplungszustände einnehmen:
1. mit der Triebwelle 10 gekoppelt (wie in Fig. 12);
2. ohne Kopplung mit der Triebwelle 10 frei drehbar;
3. gegen Drehung festgelegt.

Zwei zusätzliche mechanische Kupplungen, bei denen es sich um reibschlüssige, vorzugsweise aber um formschlüssige Kupplungen handeln kann, dienen hierzu: Eine Motorkupplung 63, die im geschlossenen Zustand den Ständer 8' mit der Triebwelle 10 koppelt (Kopplungszustand 1), und eine Festleg-Kupplung 64, die ihn im geschlossenen Zustand gegen Drehung festlegt, z.B. durch Kopplung mit dem Kurbelgehäuse 61 (Kopplungszustand 3). Für den Kopplungszustand 2 sind beide geöffnet; ein gleichzeitiges Schließen ist ein verbotener Zustand. Die Kupplungen 63, 64 (die in Fig. 9 nur aus Gründen der Rotationsymmetrie doppelt gezeichnet sind), sowie die Überbrückungskupplung 60 sind in gesteuerter Weise betätigbar, z.B. mechanisch, elektrisch, hydraulisch oder pneumatisch.

Die ASR-Eingriff erfolgt alternativ durch Kupplungsschlupf im Kopplungszustand 1 oder durch Bremswirkung im Kopplungszustand 3.

Die Steuerung der elektrischen Maschine 4 und der Kupplungen 60, 62, 63 erfolgt durch die verschiedenen Betriebszustände und Funktionen des Antriebssystems gemäß folgenden Verfahrensabläufen:
1. Starten des Verbrennungsmotors 1 (Schwungrad-Start):
   i. Gang freischalten (z.B. durch Bedienungsperson);
   ii. Motorkupplung 63 wird geschlossen;
   iii. Läufer 9 wird durch elektrische Maschine 4 auf hohe Drehzahl beschleunigt;
   iv. Bremsmoment in elektrischer Maschine 4 wird eingeschaltet, dadurch wird Läufer 9 abgebremst und Ständer 8' beschleunigt, so daß der Verbrennungsmotor 1 startet;
2. Anfahren des Fahrzeugs:
   i. Überbrückungskupplung 60 wird geöffnet;
   ii. Läufer 9 wird durch elektrische Maschine 4 zum Stillstand gebracht;
   iii. 1. Gang wird eingelegt (z.B. durch Bedienungsperson);
   iv. Läufer 9 wird elektromagnetisch mit Anfahr-Nennmoment beschleunigt, d.h. durch Ständer 8' mitgenommen;
   v. bei Gleichlauf wird Überbrückungskupplung 60 geschlossen;
3. Stationärer Fahrbetrieb mit Drehungleichförmigkeits-Verringerung:
   i. Motorkupplung 63 wird geöffnet, so daß der Ständer 8' frei dreht;
   ii. Ständer 8' wird durch elektrische Maschine 4 zum Stillstand gebracht;
   iii. Festleg-Kupplung 64 wird geschlossen, so daß eine starre Verbindung zwischen Ständer 8' und dem Kurbelgehäuse des Verbrennungsmotors 1 herrscht;
   iv. Wechselmoment zur Verringerung von Drehungleichförmigkeiten der Triebwelle 10 wird von der elektrischen Maschine 4 erzeugt;
4. Schalten:
   i. Verbrennungsmotor-Antriebsmoment wird weggenommen (ggf. mit Unterstützung der elektrischen Maschine (z.B. durch Bedienungsperson);
   ii. Überbrückungskupplung 60 wird geöffnet;
   iii. Gang wird herausgenommen (z.B. durch Bedienungsperson);
   iv. Läufer 9 wird auf diejenige neue Drehzahl beschleunigt oder abgebremst, welche die Synchronisierbedingung für den neu einzulegenden Gang erfüllt;
   v. dieser Gang wird eingelegt (z.B. durch Bedienungsperson);
   vi. Überbrückungskupplung 60 wird geschlossen;
   vii. Verbrennungsmotor-Antriebsmoment wird wieder freigegeben (z.B. durch Bedienungsperson).

   Eine Drehungleichförmigkeits-Verringerung ist auch im Leerlauf möglich, wie folgende Verfahrensabfolge zeigt, die sich an den obigen Schritt 1 anschließen kann:
5. Leerlauf mit Drehungleichförmigkeits-Verringerung:
   i. Motorkupplung 63 wird geöffnet, so daß der Ständer 8' frei dreht;
   ii. Ständer 8' wird durch elektrische Maschine 4 zum Stillstand gebracht;
   iii. Festleg-Kupplung 64 wird geschlossen, so daß eine starre Verbindung zwischen Ständer 8' und dem Kurbelgehäuse des Verbrennungsmotors 1 herrscht;
   iv. Wechselmoment zur Verringerung von Drehungleichförmigkeiten der Triebwelle 10 wird von der elektrischen Maschine 4 erzeugt.

Das Schließen der Kupplungen 60, 63, 64 erfolgt nur bei jeweils verschwindender Relativdrehzahl. Die Generatorfunktion und bremsende oder antreibende Gleich-Drehmomente werden - wie die Synchronisierungsfunktion und die Drehungleichförmigkeits-Verringerung - bei geschlossener Über brückungskupplung 60 und geschlossener Festleg-Kupplung 64 durch entsprechende bremsende bzw. antreibende Momente der elektrischen Maschine 4 verwirklicht.

Andere Ausführungsformen starten den Verbrennungsmotor 1 direkt, und zwar bei geschlossener Überbrückungskupplung 60 und geschlossener Festleg-Kupplung 64.

Die elektrische Maschine 4 gemäß Fig. 10 entspricht funktionell weitgehend der in Fig. 9 gezeigten, so daß die Ausführungen zu Fig. 9 sowie Fig. 5 bis 8 auch hier - soweit sie nicht im folgenden genannte Abweichungen betreffen - Geltung haben. Ein wesentlicher Unterschied zur Maschine gemäß Fig. 9 besteht darin, daß die Umschaltung von "drehbarem Läufer" auf "feststehenden Läufer" nicht mechanisch durch Öffnen und Schließen von Kupplungen, sondern auf elektrischem Wege erfolgt. Ein weiterer Unterschied besteht darin, daß bei der gezeigten Maschine 4 die Rollen der Triebwelle 10 und der Abtriebswelle 55 gegenüber Fig. 9 vertauscht sind, was zu geringfügigen - unten näher erläuterten - Abweichungen in der Funktionsweise führt. Bei (nicht gezeigten) Ausführungsformen entsprechen die Rollen der Triebwelle 10 und der Abtriebswelle 55 jedoch denen von Fig. 9; diese Ausführungsformen zeigen nicht diese Abweichungen.

Bei der gezeigten elektrischen Maschine 4 sind - wie gesagt - der (außenliegende) Ständer 8' und der (innenliegende) Läufer 9 drehfest und nicht entkoppelbar mit der Abtriebswelle 55 bzw. der Triebwelle 10 verbunden. Zusätzlich zum drehbaren Ständer 8' ist die Maschine 4 mit einem gegen Drehung festliegenden Ständer 8 ausgerüstet, der sich (z.B.) gegen das Kurbelgehäuse 61 abstützt. Dieser ist dem drehbaren Ständer 8' unmittelbar benachbart, und zwar in Axialrichtung (z.B.) zum Verbrennungsmotor 1 hin versetzt. Er ist koaxial zum drehbaren Ständer 8' angeordnet und weist einen Innendurchmesser wie jener auf. Die Wicklungen 36 der beiden Ständer 8', 8 sind eigenständig, so daß sie in ihrer Magnetfelderzeugung entkoppelt oder entkoppelbar sind. Der Läufer 9 ist so breit ausgebildet, daß er sich in Axialrichtung im wesentlichen über die Wirkflächen der beiden Ständer 8', 8 erstreckt. Eine Überbrückungskupplung 60 koppelt - wie in Fig. 9 - die Triebwelle 10 mit der Abtriebswelle 50. Bei anderen (nicht gezeigten) Ausführungsformen sind der Läufer 9 außen- und die Ständer 8', 8 innenliegend.

Das Umschalten zwischen dem festliegenden Ständer 8 und dem drehbaren Ständer 8' erfolgt mit Hilfe einer umschaltbaren Versorgungseinheit, hier des geeignet umschaltbaren Wechselrichters 17. Dieser versorgt entweder für die Funktionen Direktstart, Drehungleichförmigkeits-Verringerung, Fahrzeugbremsung und beschleunigung sowie die Generatorfunktion den festgelegten Ständer 8 oder für die Funktionen elektromagnetische Kupplung, Synchronisierung sowie Schwungrad-Start den drehbaren Ständer 8' mit den hierfür jeweils erforderlichen Strömen und Spannungen, wobei er zwischen diesen trägheitslos und ohne merkliche Zeitverzögerung umschalten kann.

Anders als in Fig. 9 wird die Funktion "Synchronisierung" durch Momenterzeugung zwischen dem drehbaren Ständer 8' und dem Läufer 9 gesteuert, was steuerungstechnisch wegen der Abstützung gegen die drehzahlvariable Triebwelle 10 aufwendiger ist. Dies liegt daran, daß bei der Maschine 4 gemäß Fig. 10 die Überbrückungskupplung 60 in Abtriebsrichtung gesehen hinter der durch den festliegenden Ständer 8 und den Läufer 9 gebildeten elektrischen Maschine liegt, während sie bei der Maschine 4 gemäß Fig. 9 bei festliegendem Ständer vor der elektrischen Maschine 4 liegt. Bei der (nicht gezeigten) Ausführungsform, bei der die Rollen der Triebwelle 10 und der Abtriebswelle 55 gegenüber Fig. 10 vertauscht sind, ist dieser funktionelle Unterschied zu Fig. 9 nicht vorhanden.

Bei anderen Ausführungsformen werden die beiden Ständer 8, 8' simultan und unabhängig mit Hilfe zweier unabhängiger Versorgungseinrichtungen, hier Wechselrichter 17 gespeist.

Dies ermöglicht eine Ausführung von dem festliegenden Ständer 8 zugeordneten Funktionen, z.B. der Generatorfunktion und der Drehungleichförmigkeits-Verringerung auch während der Ausführung von dem drehbaren Ständer 8' zugeordneten Funktionen, z.B. der elektromagnetischen Kupplungsfunktion.

## Patentansprüche

1. Antriebssystem für ein Kraftfahrzeug, mit
- einem Antriebsaggregat in Form eines Verbrennungsmotors (1);
- wenigstens einer mit einer Antriebswelle (10) gekoppelten elektrischen Maschine (4) ; und
- einer Antriebsschlupfregelung,
- bei welchem die elektrische Maschine (4) eine wechselrichtergesteuerte Drehstrommaschine ist, die derart ausgelegt ist, daß mit ihr eine Antriebsschlupfverringerung durch Verkleinerung des Antriebsmoments herbeiführbar ist,
- wobei der Wechselrichter (17) einen Zwischenkreis auf einem gegenüber einem Bordnetz erhöhten Spannungsniveau aufweist, und
- einem auf dem Zwischenkreisspannungniveau liegender Energiespeicher (19, 25), der die bei der Antriebsmomentverkleinerung gewonnene elektrische Energie wenigstens teilweise aufnimmt.

2. Antriebssystem nach Anspruch 1, bei welchem die Verkleinerung des Antriebsmoments durch Bremswirkung der elektrischen Maschine (4) herbeigeführt wird.

3. Antriebssystem nach Anspruch 1, bei welchem die elektrische Maschine (4) als eine im Triebstrang des Kraftfahrzeugs eingesetzte elektromagnetische Kupplung wirkt und zwei drehbare elektromagnetische Wirkeinheiten (8, 9, 8, 9) aufweist, wobei die Verkleinerung des Antriebsmoments durch Kupplungsschlupfwirkung herbeigeführt wird.

4. Antriebssystem nach Anspruch 2, bei welchem zwischen das Antriebsaggregat und die elektrische Maschine (4) eine automatisch betätigbare Kupplung geschaltet ist, die ganz oder teilweise geöffnet wird, wenn das Antriebsmoment verringert werden soll.

5. Antriebssystem nach Anspruch 3, bei welchem die elektromagnetische Kupplung mit einer mechanischen Überbrückungskupplung ausgerüstet ist, dem Zulassen eines Kupplungsschlupfes gelöst wird.

6. Antriebssystem nach einem der vorhergehenden Ansprüche, bei welchem die elektrische Maschine (4) außerdem die Funktion einer Verringerung von Drehungleichförmigkeiten durch Erzeugung eines schnell variirenden Drehmoments hat.

7. Antriebssystem nach einem der vorhergehenden Ansprüche, bei welchem die elektrische Maschine (4) die Funktion eines Starters und/oder eines Generators zur Stromversorung hat.

8. Antriebssystem nach einem der vorhergehenden Ansprüche, bei welchem die elektrische Maschine (4) eine hohe Drehmomentdichte - bezogen auf das maximale Drehmoment - aufweist (aufweisen), insbesondere größer als 0,01 Nm/cm³.

## Claims

1. A drive system for a motor vehicle, with
- a drive assembly in the form of an internal combustion engine (1);
- at least one electric machine (4) coupled with a drive shaft (10); and
- a drive slip control,
- in which the electric machine (4) is a rotary current machine, controlled by an inverter, which is configured in such a manner that with it a reduction in drive slip can be produced by reducing the driving torque,
- wherein the inverter (17) comprises an intermediate circuit at a voltage level which is at a voltage level higher than the on-board power supply, and
- an energy accumulator (19, 25), lying at the voltage of the intermediate circuit, which at least partially takes up the electrical energy obtained during the reduction of the driving torque.

2. A drive system according to Claim 1, in which the reduction of the driving torque is produced by the braking action of the electric machine (4).

3. A drive system according to Claim 1, in which the electric machine (4) acts as an electromagnetic coupling inserted in the power train of the motor vehicle and comprises two rotary electromagnetic active units (8, 9, 8, 9), the reduction in the driving torque being produced by coupling slip action.

4. A drive system according to Claim 2, in which an automatically activated clutch, which is opened entirely or partially when the driving torque is supposed to be reduced, is switched between the drive assembly and the electric machine (4).

5. A drive system according to Claim 3, in which the electromagnetic coupling is equipped with a mechanical bridge coupling, [which] is released [to] permit a clutch slip.

6. A drive system according to one of the preceding claims, in which the electric machine (4) also has the function of a reduction of rotational nonuniformities by generating a rapidly varying torque.

7. A drive system according to one of the preceding claims, in which the electric machine (4) has the function of a starter and/or a generator for current supply.

8. A drive system according to one of the preceding claims, in which the electric machine (4) has (have) a high torque density - in terms of the maximum torque - in particular greater than 0.01 Nm/cm³.

## Revendications

1. Système d'entraînement pour un véhicule automobile, comportant
- une unité d'entraînement sous la forme d'un moteur à combustion interne (1);
- au moins une machine électrique (4) couplée à un arbre d'entraînement (10); et
- une régulation de glissement d'entraînement,
- dans lequel la machine électrique (4) est une machine à courant triphasé commandée par un onduleur et qui est agencée de telle sorte qu'avec cette machine on peut réaliser une réduction du glissement d'entraînement par réduction du couple d'entraînement,
- dans lequel l'onduleur (17) comporte un circuit intermédiaire situé à un niveau de tension accru par rapport à un réseau de bord, et
- un accumulateur d'énergie (19, 25) qui est situé au niveau de tension du circuit intermédiaire et qui reçoit au moins en partie l'énergie électrique obtenue lors de la réduction du couple d'entraînement.

2. Système d'entraînement selon la revendication 1, dans lequel la réduction du couple d'entraînement est exécutée au moyen d'une action de freinage de la machine électrique (4).

3. Système d'entraînement selon la revendication 1, dans lequel la machine électrique (4) agit en tant qu'embrayage électromagnétique installé dans la chaîne motrice du véhicule automobile et comporte trois unités électromagnétiques rotatives d'actionnement (8, 9, 8, 9), la réduction du couple d'entraînement étant exécutée au moyen d'une action de glissement de l'embrayage.

4. Système d'entraînement selon la revendication 2, dans lequel un embrayage actionné automatiquement, qui est complètement ou partiellement ouvert lorsque le couple d'entraînement doit être réduit, est monté entre l'unité d'entraînement et la machine électrique (4).

5. Système d'entraînement selon la revendication 3, dans lequel l'embrayage électromagnétique est équipé d'un embrayage mécanique de prise directe, qui est desserré pour autoriser un glissement d'embrayage.

6. Système d'entraînement selon l'une des revendications précédentes, dans lequel la machine électrique (4) assume en outre la fonciton de réduction des irrégularités de rotation au moyen de la production d'un couple à variation rapide.

7. Système d'entraînement selon l'une des revendications précédentes, dans lequel la machine électrique (4) assume la fonction d'un démarreur et/ou d'un générateur pour l'alimentation en courant.

8. Système d'entraînement selon l'une des revendications précédentes, dans lequel la machine électrique (4) possède une densité élevée de couple - rapportée au couple maximum -, en particulier supérieure à 0,01 Nm/cm³.
